# EUROPEAN PATENT APPLICATION

(11) **EP 4 574 566 A1**
(43) Date of publication of application: **25.06.2025**
(21) Application number: 24222875.7
(22) Date of filing: 23.12.2024
(51) Int. Cl.: B60P 1/00, B60P 3/00, B60P 9/00, B60R 9/04, B60R 9/08, B60D 1/00, B60D 1/62, B60K 35/00

(54) **METHOD AND APPARATUS TO UTILIZE RESOURCES OF ITEM ATTACHED TO THE VEHICLE**

(30) Priority: 21.12.2023 US 202318393172
(71) Applicant: Volvo Car Corporation, 405 31 Göteborg (SE)
(72) Inventor: ROPEL, Andreas, 40531 Göteborg (SE); LE SAUX, Mathias, 40531 Göteborg (SE); LARSSON, Daniel, 40531 Göteborg (SE); HÄRSJÖ, Joachim, 40531 Göteborg (SE)
(74) Representative: Maiwald GmbH

(57) **Abstract**

According to an embodiment, it is a system comprising a processor; a communication module; wherein the processor is operable to determine, that an item is attached to a vehicle forming a vehicle combination; establish, a first connection of the vehicle with the item that is being attached via the communication module; initiate, a communication via a connector with the item, wherein the communication comprises a message comprising a specification, wherein the specification comprises an object that is being carried by the item; establish, a second connection with the object that is being carried by the item; determine, a first resource with the item; determine, a second resource with the object; and use the first resource and the second resource.

## Description

### FIELD OF THE INVENTION

The present disclosure relates to vehicles with attachment of an item. More specifically, the present disclosure relates to systems and methods for detecting a change in vehicle configuration due to attachment of an item, identifying the resources associated with the item and the load on the item, and utilizing the resource.

### BACKGROUND

When a driver attaches an item (e.g., a trailer attachment) to a vehicle, the attachment may have resources associated with the vehicle combination that may be used by the vehicle.

Therefore, there is a need for systems and methods to determine resources of item(s) that get attached to the vehicle and utilize the resources (e.g., battery, sensors, etc.).

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

According to an embodiment, it is a system comprising a processor; a communication module; wherein the processor is operable to determine, that an item is attached to a vehicle forming a vehicle combination; establish, a first connection of the vehicle with the item that is being attached via the communication module; initiate, a communication via a connector with the item, wherein the communication comprises a message comprising a specification, wherein the specification comprises an object that is being carried by the item; establish, a second connection with the object that is being carried by the item; determine, a first resource with the item; determine, a second resource with the object; and use the first resource and the second resource.

According to an embodiment, it is a method determining, that an item is attached to a vehicle forming a vehicle combination; establishing, a first connection of the vehicle with the item that is being attached via a communication module; initiating, a communication via a connector with the item, wherein the communication comprises a message comprising a specification, wherein the specification comprises an object that is being carried by the item; establishing, a second connection with the object that is being carried by the item; determining, a first resource with the item; determining, a second resource with the object; and using the first resource and the second resource.

According to an embodiment, it is a non-transitory computer-readable medium having stored thereon instructions executable by a computer system to perform operations comprising, determining, that an item is attached to a vehicle forming a vehicle combination; establishing, a first connection of the vehicle with the item that is being attached via a communication module; initiating, a communication via a connector with the item, wherein the communication comprises a message comprising a specification, wherein the specification comprises an object that is being carried by the item; establishing, a second connection with the object that is being carried by the item; determining, a first resource with the item; determining, a second resource with the object; and using the first resource and the second resource.

### BRIEF DESCRIPTION OF THE FIGURES

These and other aspects of the present invention will now be described in more detail, with reference to the appended drawings showing exemplary embodiments of the present invention, in which:
FIG. 1 is an illustration of an example autonomous vehicle with various sensors, actuators, and systems according to an embodiment.
FIG. 2 shows a block diagram of electronic components of a vehicle according to an embodiment.
FIG. 3 shows the block diagram of the system and its components for detecting a change in vehicle configuration and estimating a safety zone according to an embodiment.
FIG. 4A shows a system for vehicle configuration detection module and vehicle attachment parameters estimation module according to an embodiment.
FIG. 4B shows obtaining item or attachment details from the item itself according to an embodiment.
FIG. 4C shows obtaining item or attachment details from the cloud network according to an embodiment.
FIG. 4D shows various connections between the trailer and the vehicle according to an embodiment.
FIG. 4E shows detecting an attachment or trailer using wired communication according to an embodiment.
FIG. 4F shows detecting an attachment or trailer using wireless communication according to an embodiment.
FIG. 4G shows an electrical charging connection between the vehicle and the object on the trailer for using the battery associated with the object according to an embodiment.
FIG. 4H shows an electrical charging connection between the vehicle and the object on the trailer via the trailer for using the battery associated with the object according to an embodiment.
FIG. 5A shows input and output to the Safe Zone Estimation Module according to an embodiment.
FIG. 5B shows an example communication message format and memory allocation according to an embodiment.
FIG. 5C shows an example message exchange between trailer and the vehicle according to an embodiment.
FIG. 5D shows a Safe Zone with attachment displayed on the infotainment system of the vehicle according to an embodiment.
FIG. 5E shows an example message displayed on the infotainment system of the vehicle according to an embodiment.
FIG. 6A shows a structure of the neural network / machine learning model with a feedback loop according to an embodiment.
FIG. 6B shows a structure of the neural network / machine learning model with reinforcement learning according to an embodiment.
FIG. 6C shows an example block diagram for predicting a safety zone using a machine learning model according to an embodiment.
FIG. 6D shows an example flow chart for continuous monitoring, adaptively changing the safety zone, and recommending an action using a machine learning model according to an embodiment.
FIG. 7A shows a block diagram for a method for estimating a safety zone based on change in configuration of the vehicle according to an embodiment.
FIG. 7B shows a block diagram for a system for estimating a safety zone based on change in configuration of the vehicle according to an embodiment.
FIG. 7C shows a block diagram for a method stored on a non-transitory computer medium for estimating a safety zone based on change in configuration of the vehicle according to an embodiment.
FIG. 8 shows a block diagram for a method for determining a safety zone and then adaptively changing the safety zone from active sensor data according to an embodiment.
FIG. 9A shows a block diagram for a method for estimating a safety zone based on active sensor data from the vehicle combination according to an embodiment.
FIG. 9B shows a block diagram for a system for estimating a safety zone based on active sensor data from the vehicle combination according to an embodiment.
FIG. 9C shows a block diagram for a method stored on a non-transitory computer medium for estimating a safety zone based on active sensor data from the vehicle combination according to an embodiment.
FIG. 10A shows a block diagram for a method for utilizing a resource from the trailer and the object loaded on the trailer by the vehicle according to an embodiment.
FIG. 10B shows a block diagram for a system for utilizing a resource from the trailer and the object loaded on the trailer by the vehicle according to an embodiment.
FIG. 10C shows a block diagram for utilizing a resource from the trailer and the object loaded on the trailer by the vehicle according to an embodiment.
FIG. 11 shows the block diagram of the cyber security module according to an embodiment.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs. The following terms and phrases, unless otherwise indicated, shall be understood to have the following meanings.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and / or "exemplary" mean serving as an example, instance, or illustration. For the avoidance of doubt, such examples do not limit the herein described subject matter. In addition, any aspect or design described herein as an "example" and / or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and / or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more." Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and / or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and / or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and / or in computing speeds, the term "real-time" encompasses operations that occur in "near" real-time or somewhat delayed from a triggering event. In a number of embodiments, "real-time" can mean real-time less a time delay for processing (e.g., determining) and / or transmitting data. The particular time delay can vary depending on the type and / or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

As used herein the term "component" refers to a distinct and identifiable part, element, or unit within a larger system, structure, or entity. It is a building block that serves a specific function or purpose within a more complex whole. Components are often designed to be modular and interchangeable, allowing them to be combined or replaced in various configurations to create or modify systems. Components may be a combination of mechanical, electrical, hardware, firmware, software and/or other engineering elements.

Digital electronic circuitry, or computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and / or methods is not limiting to the implementations. Thus, any software and any hardware can implement the systems and / or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship with each other.

Embodiments of the present invention may comprise or utilize a special purpose or general purpose computer including computer hardware. Embodiments within the scope of the present invention may also include physical and other computer-readable media for carrying or storing computer-executable instructions and / or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and / or Digital Signal Processor (DSP) circuit) may embody the various electrical structures and methods.

In addition, a non-transitory machine-readable medium and / or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" refers to one or more data links that enable the transport of electronic data between computer systems and / or modules and / or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and / or modules and / or other electronic devices. The term network may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and / or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and / or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and / or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and / or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of algorithms. A sufficiently detailed protocol includes details about data structures and representations, to implement multiple, interoperable versions of a program.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the Artificial Intelligence/Machine Learning (AI/ML) model improving the model's accuracy and performance over time. Statistical modeling relies on finding relationships between variables (e.g., mathematical equations) to predict an outcome.

As used herein, the term "Data mining" is a process used to turn raw data into useful information. It is the process of analyzing large datasets to uncover hidden patterns, relationships, and insights that can be useful for decision-making and prediction.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "sensor" is a device that detects and measures physical properties from the surrounding environment and converts this information into electrical or digital signals for further processing. Sensors play a crucial role in collecting data for various applications across industries. Sensors may be made of electronic, mechanical, chemical, or other engineering components. Examples include sensors to measure temperature, pressure, humidity, proximity, light, acceleration, orientation etc.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging etc.

The term "autonomous mode" as used herein refers to an operating mode which is independent and unsupervised.

The term "vehicle" as used herein refers to a thing used for transporting people or goods. Automobiles, cars, trucks, buses etc. are examples of vehicles.

The term "autonomous vehicle" also referred to as self-driving vehicle, driverless vehicle, robotic vehicle as used herein refers to a vehicle incorporating vehicular automation, that is, a vehicle that can sense its environment and move safely with little or no human input. Self-driving vehicles combine a variety of sensors to perceive their surroundings, such as thermographic cameras, Radio Detection and Ranging (RADAR), Light Detection and Ranging (LIDAR), Sound Navigation and Ranging (SONAR), Global Positioning System (GPS), odometry and inertial measurement unit. Control systems are designed for the purpose of interpreting sensor information to identify appropriate navigation paths, as well as obstacles and relevant signage.

The term "communication module" or "communication system" as used herein refers to a system which enables the information exchange between two points. The process of transmission and reception of information is called communication. The elements of communication include but are not limited to a transmitter of information, channel or medium of communication and a receiver of information.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "communication connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networks. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and / or data from one point to another. Communication may be by means of electromagnetic waves. Communication is also a flow of information from one point, known as the source, to another, the receiver. Communication comprises one of the following: transmitting data, instructions, information or a combination of data, instructions, and information. Communication happens between any two communication systems or communicating units. The term communication, herein, includes systems that combine other more specific types of communication, such as: V2I (Vehicle-to-Infrastructure), V2N (Vehicle-to-Network), V2V (Vehicle-to-Vehicle), V2P (Vehicle-to-Pedestrian), V2D (Vehicle-to-Device), V2G (Vehicle-to-Grid), and Vehicle-to-Everything (V2X) communication.

Further, the communication apparatus is configured on a computer with the communication function and is connected for bidirectional communication with the on-vehicle emergency report apparatus by a communication line through a radio station and a communication network such as a public telephone network or by satellite communication through a communication satellite. The communication apparatus is adapted to communicate, through the communication network, with communication terminals.

The term "Vehicle-to-Vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "Vehicle-to-Everything (V2X) communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "protocol" as used herein refers to a procedure required to initiate and maintain communication; a formal set of conventions governing the format and relative timing of message exchange between two communications terminals; a set of conventions that govern the interactions of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications between communications terminals; a formal set of conventions governing the format and relative timing of message exchange between communications terminals; a set of semantic and syntactic rules that determine the behavior of functional units in achieving meaningful communication; a set of semantic and syntactic rules for exchanging information.

The term "communication protocol" as used herein refers to standardized communication between any two systems. An example communication protocol is a DSRC protocol. The DSRC protocol uses a specific frequency band (e.g., 5.9 GHz (Gigahertz)) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the Institute of Electrical and Electronics Engineers (IEEE) and Society of Automotive Engineers (SAE) International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and / or data, using any system, hardware, software, protocol, or format regardless of whether the exchange occurs wirelessly or over a wired connection.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with automotive electronics.

The terms "non-transitory computer-readable medium" and "computer-readable medium" include a single medium or multiple media such as a centralized or distributed database, and / or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer readable medium" is expressly defined to include any type of computer readable storage device and / or storage disk and to exclude propagating signals.

The term "Vehicle Data bus" as used herein represents the interface to the vehicle data bus (e.g., Controller Area Network (CAN), Local Interconnect Network (LIN), Ethernet/IP, FlexRay, and Media Oriented Systems Transport (MOST)) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in a Recommended Standard 232 (RS-232) serial transmission. A software handshake sends codes such as "synchronize" (SYN) and "acknowledge" (ACK) in a Transmission Control Protocol/Internet Protocol (TCP/IP) transmission.

The term "computer vision module" or "computer vision system" allows the vehicle to "see" and interpret the world around it. This system uses a combination of cameras, sensors, and other technologies such as Radio Detection and Ranging (RADAR), Light Detection and Ranging (LIDAR), Sound Navigation and Ranging (SONAR), Global Positioning System (GPS), and Machine learning algorithms, etc. to collect visual data about the vehicle's surroundings and to analyze that data in real-time. The computer vision system is designed to perform a range of tasks, including object detection, lane detection, and pedestrian recognition. It uses deep learning algorithms and other machine learning techniques to analyze visual data and make decisions about how to control the vehicle. For example, the computer vision system may use object detection algorithms to identify other vehicles, pedestrians, and obstacles in the vehicle's path. It can then use this information to calculate the vehicle's speed and direction, adjust its trajectory to avoid collisions, and apply the brakes or accelerate as needed. It allows the vehicle to navigate safely and efficiently in a variety of driving conditions.

As used herein, the term "driver" refers to such an occupant, even when that occupant is not actually driving the vehicle but is situated in the vehicle so as to be able to take over control and function as the driver of the vehicle when the vehicle control system hands over control to the occupant or driver or when the vehicle control system is not operating in an autonomous or semi-autonomous mode. Driver is also referred to as an operator of the vehicle.

The term "nearby vehicle" or "neighboring vehicle" or "surrounding vehicle" as used herein refers to a vehicle anywhere near to the referred vehicle within a communication range of the referred vehicle. It may or may not be an autonomous vehicle. It may or may not have been enabled for V2V communication. In some embodiments, a neighboring vehicle may more specifically refer to a vehicle that is immediately in the next lane or behind the host vehicle.

The term "application server" refers to a server that hosts applications or software that delivers a business application through a communication protocol. An application server framework is a service layer model. It includes software components available to a software developer through an application programming interface. It is system software that resides between the operating system (OS) on one side, the external resources such as a database management system (DBMS), communications and Internet services on another side, and the users' applications on the third side.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein.

The flowcharts and block diagrams in the figures illustrate the architecture, functionality and / or operation of possible implementations of systems, computer-implementable methods and / or computer program products according to one or more embodiments described herein. In this regard, each block in the flowchart or block diagrams can represent a module, segment and / or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and / or the blocks can sometimes be executed in the reverse order, depending upon the functionality involved. It will also be noted that each block of the block diagrams and / or flowchart illustration, and / or combinations of blocks in the block diagrams and / or flowchart illustration, can be implemented by special purpose hardware-based systems that can perform the specified functions and / or acts and / or carry out one or more combinations of special purpose hardware and / or computer instructions.

As used in this application, the terms "component," "system," "platform," "interface," and / or the like, can refer to and / or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and / or a computer. By way of illustration, both an application running on a server and the server can be a component. One or more components can reside within a process and / or thread of execution and a component can be localized on one computer and / or distributed between two or more computers. In another example, respective components can execute from various computer readable media having various data structures stored thereon. The components can communicate via local and / or remote processes such as in accordance with a signal having one or more data packets (e.g., data from one component interacting with another component in a local system, distributed system and / or across a network such as the Internet with other systems via the signal). As another example, a component can be an apparatus with specific functionality provided by mechanical parts operated by electric or electronic circuitry, which is operated by a software and / or firmware application executed by a processor. In such a case, the processor can be internal and / or external to the apparatus and can execute at least a part of the software and / or firmware application. As yet another example, a component can be an apparatus that provides specific functionality through electronic components without mechanical parts, where the electronic components can include a processor and / or other means to execute software and / or firmware that confers at least in part the functionality of the electronic components. In an aspect, a component can emulate an electronic component via a virtual machine, e.g., within a cloud computing system.

The embodiments described herein include mere examples of systems and computer-implemented methods. It is, of course, not possible to describe every conceivable combination of components and / or computer-implemented methods for purposes of describing the one or more embodiments, but one of ordinary skill in the art can recognize that many further combinations and / or permutations of the one or more embodiments are possible. Furthermore, to the extent that the terms "includes," "has," "possesses," and the like are used in the detailed description, claims, appendices and / or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and / or technical improvement over technologies found in the marketplace, and / or to enable others of ordinary skill in the art to understand the embodiments described herein.

The term "range" as used herein refers to the maximum distance the vehicle can travel before needing to be refueled or recharged. The term is commonly used in the context of Electric Vehicles (EVs) and hybrid vehicles, as well as traditional internal combustion engine vehicles that use gasoline, diesel, or other fuels. The range is typically measured in miles or kilometers and represents the distance the vehicle can cover.

The term "item" as used herein in reference to a vehicle encompasses a range of things or attachments that may be added to the vehicle. It may also include a separate, unpowered trailer that is connected to a motorized vehicle. Broadly, it can be referred to as anything that changes or affects the vehicle's range and/or vehicle's dimensions. Some of the examples could be cargo, trailers, bikes, boats, etc. Some of the accessories for the attachment facilitation can either be factory-installed by the manufacturer or added aftermarket by vehicle owners or professionals. Some common examples include roof racks for carrying extra cargo, towing hitches for hauling trailers, bike racks for bicycle transportation, and cargo carriers for carrying additional luggage and gear, etc. A trailer is any wheeled construction that is pulled by another vehicle. Some common trailer types include utility trailers, popup campers, travel trailers, livestock trailers, flatbed trailers and boat trailers. A trailer can also include an automotive vehicle towed by a recreational vehicle (RV) or another automotive vehicle.

The term "vehicle configuration" refers to the specific setup or arrangement of items in a vehicle, considering whether attachments or additional items are present or not and where they are present. This configuration can involve a variety of accessories and improvements intended to enhance the vehicle's functionality, appearance, and / or performance. These modifications may include factory-installed features by the manufacturer or aftermarket additions by vehicle owners or professionals. Examples of different vehicle configurations include having a trailer attached versus not having one, having a bike rack installed versus not having one, and having a bike secured in the bike rack versus not having a bike in the rack. Additionally, the location of the bike, such as on a luggage rack above the vehicle or on a bike rack behind the vehicle, is also considered in the vehicle configuration. The concept of vehicle configuration becomes relevant when changes affect the vehicle's range and/or vehicle's dimensions, indicating how and how much such alterations influence the vehicle's overall range and/or overall dimensions. A change in vehicle configuration is any change to the vehicle that impacts range or dimensions. A vehicle along with its attachment such as a trailer is also referred to as a vehicle combination.

The term "vehicle combination" refers to a set of vehicles that are interconnected or joined together for the purpose of transportation and/or towing. This combination may comprise different types of vehicles, such as a truck and trailer, or multiple trailers connected as a configuration. It may be used for transporting goods, materials, or people, and often requires specific regulations, licensing, and handling considerations based on the combination's size, weight, and type. For instance, common vehicle combinations include tractor-trailer trucks, buses towing trailers, or multiple trailers attached to a single towing vehicle.

The term "safety zone" or "safe zone" of a vehicle refers to the area immediately surrounding a vehicle where extra caution and safety measures should be taken to avoid accidents or hazards. This zone may vary depending on the type of vehicle, its size, and the circumstances, but it generally extends a certain distance around the vehicle. Safe zones may include the space around the vehicle, to the front, sides, and rear, typically within a few feet or meters. This area varies depending on whether the vehicle is stationary or moving at low speeds, size of the vehicle, weight of the vehicle, whether the vehicle is changing lanes, speeding up, or overtaking other vehicles, in addition to considering any attachments forming a vehicle combination. Larger vehicles such as buses, trucks, or heavy machinery have larger safety zones due to their size and blind spots. These larger vehicles may often have specific blind spots or "no-zones" where the driver's visibility is limited. Determining the proper safety zone of a vehicle and maintaining the same ensures road safety and prevents accidents. The safety zone may be specified in feet or meters around the vehicle as a circular region or it can vary on each side of the vehicle. In an embodiment, the safety region could be a rectangular region. In another embodiment, the front safety zone region may be different to the back safety region, left side safety region may be different from right safety region, front safety region and back safety region, etc., depending on the vehicle combination, vehicle combination actions, and surroundings. The safety region may be adaptive, meaning the system may have the ability to adjust or modify the safety region in response to varying conditions, circumstances, or input. In an embodiment, the safety zone may be an adaptive smart safety zone. The system may determine an adaptive smart safety zone by utilizing active data from sensors and intelligent technologies and dynamically adjust the safety zone based on changing conditions.

The term "situational awareness" refers to the system's ability to perceive, comprehend, and appropriately respond to the dynamic and evolving environment in which a vehicle operates. It involves continuously monitoring and understanding the surroundings, including the positions and movements of other vehicles, pedestrians, road conditions, traffic signals, and potential obstacles. A situational awareness system allows the autonomous vehicle to make informed decisions and take actions based on the real-time data it collects from various sensors, such as cameras, lidar, radar, and other technologies.

In an aspect, the problem is that when a driver attaches an item (e.g., a trailer) to a vehicle, the length of the vehicle changes. The safety zone changes. Thus, the safe distance to switch lanes, stopping distance and turning radius has been changed. In today's vehicles, the new length, new weight, or new height is not communicated to the vehicle, thereby making it unsafe or problematic for the driver. Thus, a new connection and system needs to be provided that adaptively determines the new safety zone based on the item that was added.

In one aspect, a system with communication capabilities is provided such that when an item is attached to the vehicle, data of the item being attached is transmitted to the vehicle. Upon receiving the data, the system calculates the overall length, overall height, overall weight of the vehicle combination and modifies the safety zone to include the item. For example, when a trailer is attached (e.g., X feet long trailer, with Y height, and Z weight) the vehicle receives a signal or message providing the specification of the trailer (e.g., X, Y, Z trailer). Further, the message may also include a make and model data of the item being attached. Then the vehicle calculates the impact on length (e.g., adding X to the length of the vehicle). Now the vehicle is the original vehicle length plus X. In an aspect, the system considers the additional length when determining the safe distance between another vehicle in the merging lane to the rear of the item attached to the vehicle.

In another aspect, a system considers the impact of the added weight to modify the safe stopping zone. For example, without the attachment, the safe zone for a vehicle may be A, and with the attachment it may now be B (e.g., based on total weight of the vehicle and attachment).

In another aspect, upon receiving the signal and data from the attached item, the system alerts the driver about possible contact zones, due to increased length, on existing routes (e.g., highlights every turn that would be difficult or not possible to make).

The system is operable for receiving data or extracting data from the attached item. The data may include Vehicle identification number (VIN), length of the item, height of the item, and weight of the item. This information can be gathered wirelessly, wired or from the operator. Once the system has gathered the data regarding the attached item, the system determines a new safe zone. For example, the system will consider the additional height, length, and weight when providing a safe distance to change lane, safe distance to follow, safe distance to turn, etc. This system is useful because it allows the operator to continue relying on the alert system to safely change lanes and navigate the vehicle.

In one aspect, the problem is that when a driver attaches an item (e.g., a trailer) to the vehicle, the length of the vehicle has changed. The safe zone changes. Thus, the safe distance to switch lanes, stopping distance, and turning radius has been changed. In today's vehicle, the new length, new weight, or new height is not communicated to the vehicle, thereby making it unsafe or problematic for the driver. Thus, a new connection and system needs to be provided that adaptively determines a new safety zone based on the item that was added. In an aspect, a connector is provided that is capable of two way communication with any item that is being attached. Upon attachment, the system initiates communication with the connector of the item that is being attached. Once the communication is established, the system extracts length, weight, and height data about the item that is being attached. In one aspect, the communication is wireless using a protocol, wherein the protocol may comprise a standard signal that provides predefined data.

In another aspect, the system is capable of receiving active data from the sensors connected to attachment (e.g., trailer having various sensors). The data from these sensors is provided to the vehicle system. Using these sensors, the vehicle can adaptively modify the safety zone. The sensor can provide data about weight of the object, traffic or obstacles next to the vehicle, and road condition data. Once the item/trailer is attached to the vehicle and upon establishing a two way communication, the system begins monitoring any and/or all sensors that are available on the trailer system to provide an enhanced contact zone. During operation the system will use the enhanced contact zone to provide warnings to the operator when attempting to make a lane change or when the vehicle may come into contact with another object.

In an aspect, the operator connects an item (e.g., a trailer) to the vehicle; communication between the system and the item is established, preferably by the system, and the vehicle receives the trailer and load details. The system then adjusts the safe zone (determines the new safe zone) based on the additional length and weight (and possibly the height) of the item. When the turn signal is activated, the system determines if there are any objects within the new safe zone. If any object is found in the new safe zone, an alert is initiated.

In another example, if the operator places the vehicle in reverse (R) the system, using the sensors of the attached item and/or estimated safe zone based on length, the system determines if there are any objects within the safe zone. In an aspect, the system will utilize the sensors provided on the attachment to determine the new safe zone.

It would be further advantageous to use resources of item(s) that get attached to the vehicle. Today, there is no system that allows the vehicle to utilize the resources of the trailer system (e.g., battery, sensors, etc.) other than brake lights and turn signals.

In an aspect, once the system has established a connection or communication with the items attached (e.g., a trailer), including additional objects carried by the item (e.g., another vehicle such as a car on the trailer), the system scans for all the resources available for use. For example, the system determines if the system can use one or more sensors of the trailer. Using the available sensors, the system generates a new safe zone. In an aspect, the vehicle will establish a bidirectional charging with the attached item once the connection is established with the attached item. In an aspect, if the trailer is carrying a battery, the system can use it to charge the vehicle's battery or to provide charge to the trailer. If the trailer is carrying another vehicle or any other items having a battery, the system can connect to the driving vehicle and provide a charge to, or utilize energy from, the trailer and the vehicle carried by the trailer. The system receives data about the item (e.g., trailer) being attached and all the sensors available for use. In addition, the system receives information about additional objects being carried (e.g., a car, boat, or golf cart). The additional objects can be any item capable of connecting to the item (/trailer) or the vehicle and having resources that can be used by the vehicle. Once the system is connected to all the available resources, the system can generate a new safe zone. The system can also generate a new range based on available energy from the attached item(s). This system is useful because the vehicle can utilize all the available resources (e.g., sensors, battery, fuel, etc.) while it transports the items.

In an embodiment, the system determines the impact of an item (e.g., trailer) attached to the vehicle. In a vehicle, sensors provide a warning for the safety zone based on the length of the vehicle and attachments. Sensors may also provide warnings whether it is safe to get into the next lane. If there is any other vehicle / object within the safety zone, as determined by the vehicle, the vehicle will be providing a warning, but it may not stop the driver from changing the lane unless collision is imminent. If the driver tries to go into the lane where a collision is imminent, as determined by the vehicle, the system will provide the driver with a warning that is of higher level meaning, it may be a flashing warning, it may be a flashing warning combined with color and sound before the vehicle applies the brakes autonomously.

When an attachment/item is added to the vehicle, there is no system available that does any recalculation or reevaluation of the safety zone based on what is attached. The vehicle does not know the new safe zone limits. When the vehicle is driving with a trailer (small, big, medium), a motorhome, etc., the safety zone for the vehicle changes accordingly. Therefore, it will be necessary to have a system that when a new item is attached, the system automatically determines or modifies the current safety zone to the new safety zone.

When an attachment, like a trailer, is attached to the vehicle forming a vehicle combination, a communication is established to determine the overall length of the vehicle combination using the information received from the trailer to recalculate the safe zone. The communication may be wired or wireless communication. When the driver of the vehicle with attachment needs to change lanes, or make a turn, or is trailing another vehicle, the system provides the warnings based on the updated safety zone.

Further, there may be sensors and transmitters in the trailer that send information to the vehicle once the trailer is attached. The information may be a message in which the trailer provides its specification details, wherein the specification details comprise trailer length, trailer weight, trailer width, trailer Vehicle Identification Number (VIN) number, etc. The vehicle then adjusts the safety zone based on the information. A safety zone feature may comprise, for example, a safe braking distance or a safe trailing distance. With an added trailer, the braking distance and force has to be adjusted for safety. For example, without the trailer, the trailing distance of the vehicle may be 60 feet, but with the added trailer the trailing distance may have to be adjusted to 90 feet, because with the added trailer weight, a larger braking distance is needed, increasing the safety zone to be longer than the initial safety zone. Similarly, another safety zone feature may comprise, for example, a lane change distance. When a trailer is added, the lane change distance is modified or adjusted based on the overall length of the vehicle combination. When the vehicle is too close to another vehicle in the front, or when the vehicle tries to switch lanes the alarm or warning system goes off with the new/ adjusted/ modified safety zone.

In one embodiment, the communication between the vehicle and the attachment is a two way communication. The communication can be a wired communication or a wireless communication. In an embodiment, communication occurs when the vehicle is attached with the item or the attachment. Once the communication link is established, the information related to the specification of the trailer gets transmitted. The specification of the trailer is transmitted via a message. The message comprises one or more of a Vehicle (Trailer) Identification Number (VIN), a height of the trailer, a length of the trailer, a weight of the trailer, a make and model of the trailer, a wheelbase, a payload, number of trailer wheels, resources of the trailer, and details of the payload. The message further comprises one or more of a load identification, load category, load weight, load dimensions, resources associated with the load, and sensors associated with the load. The vehicle receives the message from the trailer, which then takes into consideration the dimensions and the load in determining the safety zone. In an embodiment, the trailer has transmitting capability. In an embodiment, the trailer has transmitting and receiving capability. In an embodiment, the vehicle has receiving capability. In an embodiment, the vehicle has receiving and transmitting capability. In an example, a first vehicle is being towed by a second vehicle. So, the first vehicle and the trailer can send information to the second vehicle and then the second vehicle will receive the information and process the information.

The trailer may be actually carrying another vehicle, an electric car. The vehicle to which the trailer is attached may use the resources of that electric car. For example, an available range can be modified taking into consideration the electric charge available from the electric car. For example, if nothing is attached to the vehicle, the available range may be 200 miles, but after attaching a trailer with load (say electric car) the available range may be reduced to say 150 miles by considering the weight of the trailer and the load on the trailer. Since the electric car on the attached trailer may be having a battery with charge, the vehicle can use the battery by establishing an electrical connection appropriate to draw power from the battery of the electric vehicle loaded on to the trailer. In an embodiment, the connection or combination allows the use of the resources that are on a trailer. The connection firstly determines what got connected to the vehicle, determines all of the resources by having communication back and forth between the vehicle and the attachment, determines access capability of the resources, initiates a request to access the resources, then establishes a way to access resources, for example, accessing the battery charge of the electric car that is on the trailer. The trailer itself may also have a bunch of batteries on it as well, which can also be accessed. A connection may be initiated via the trailer to access a first resource on the trailer and a second resource on the electric car loaded on the trailer.

In an embodiment, the resources may be a battery, sensors, cameras, spare tire, first aid kit, etc., which are available on both the attachment as well as the object loaded on the attachment. If a trailer or the vehicle on the trailer has cameras, they can be used to provide information to the driver. Many times, the cameras of the vehicle only provide the view of the vehicle surroundings. But when a trailer is attached, maybe those vehicle cameras are blocked, but if the trailer has cameras, then those cameras, which are resources associated with the trailer, may be used. As a first step the system may determine all of the resources available with the trailer and all of the resources available with the object loaded on the trailer. The information on the resources and their accessibility gets communicated. In an embodiment, a specification of attachment and a specification of the object that is loaded on the attachment gets transmitted by the connection between the trailer and the vehicle. The vehicle receives the communication and then establishes appropriate connections to access the resources of the attachment and the resources of the object that is loaded on the attachment, as needed. In an embodiment, the specification of the attachment comprises Identification Number (VIN), make and model, how many sensors, location of such sensors, and the capabilities of the sensors, how many cameras, location of such cameras, and the capabilities of the cameras, battery capacity, capability of giving a discharge of the battery power and specification of the object that is being carried on the attachment. In an embodiment, the specification of the object comprises Identification Number (VIN), make and model, how many sensors, location of such sensors, and the capabilities of the sensors, how many cameras, location of such cameras, and the capabilities of the cameras, battery capacity, capability of giving a discharge of the battery power. The resources may comprise battery, sensors, emergency equipment / spare parts and maintenance tools such as tires, jack, jumper cables, first aid kits, etc., cameras, sub-systems, exterior lighting, connectivity equipment, communication infrastructure for V2V communication, V2I communication, etc., relevant data. In an embodiment, the connection to access resources of the object is via the attachment. In an embodiment, the sensors may comprise weather sensors, traffic flow, environmental sensors, location sensors, etc. In an embodiment, the sub-systems comprise navigation system, communication system, external lighting system, etc. In an embodiment, the relevant data comprises sensor data, control data, traffic data, environmental data, etc.

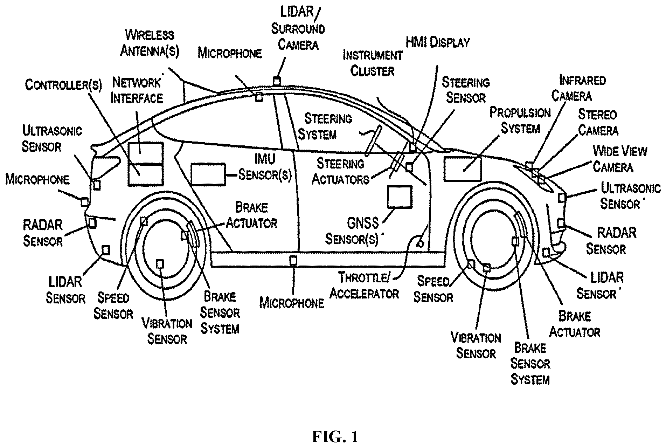

FIG. 1 is an illustration of an autonomous vehicle with various sensors, actuators, and systems according to an embodiment. The Autonomous system comprises various sensors, such as ultrasonic sensor, LIDAR sensors, radar sensors, etc., actuators such as brake actuators, steering actuators, etc., and various subsystems such as propulsion system, steering system, brake sensor system, communication system, etc. FIG. 1 is depicted as an example system; neither is it limited by the systems depicted nor is it an exhaustive list of the sensors, actuators, and systems / subsystems, and / or features of the autonomous vehicle. Further, the vehicle shown should not be construed as limiting in terms of the arrangement of any of the sensors, actuators, and systems / subsystems depicted. These sensors, actuators, and systems / subsystems can be arranged as suited for a purpose to be performed by the autonomous vehicle. Autonomous vehicles, also known as self-driving vehicles or driverless vehicles, are vehicles that can navigate and operate without human intervention. Sensors, for example, including cameras, LIDARs, radars, and ultrasonic sensors enable autonomous vehicles to detect and recognize objects, obstacles, and pedestrians on the road. Autonomous vehicles use advanced control systems to make real-time decisions based on sensor data and pre-programmed rules or intelligence-based decision systems. These systems control, for example, acceleration, braking, steering, and communication of the vehicle. Navigation systems such as GPS, maps, and other location-based technologies help autonomous vehicles navigate and plan the optimal route to a destination. Communication systems of autonomous vehicles help them communicate with other vehicles and infrastructure, such as traffic lights and road signs, to exchange information and optimize traffic flow. Autonomous vehicles have several safety features, including collision avoidance systems, emergency braking, and backup systems in case of system failures. Autonomous vehicles are assisted by artificial intelligence and machine learning algorithms to analyze data, recognize patterns, and improve performance over time.

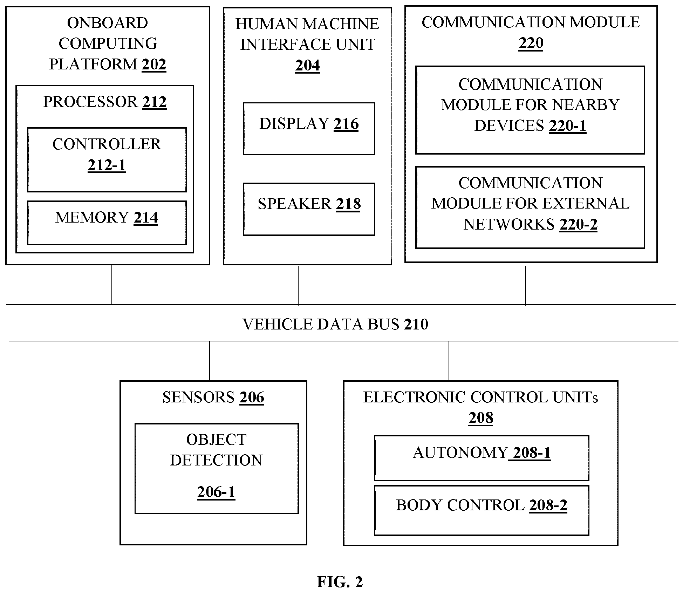

FIG. 2 shows a block diagram of electronic components of a vehicle according to an embodiment. In the illustrated example, the electronic components include an onboard computing platform 202, a human-machine interface (HMI) unit 204, the communication module 220, sensors 206, electronic control units (ECUs) 208, and a vehicle data bus 210. FIG. 2 illustrates an example architecture of some of the electronic components as displayed in FIG. 1.

The onboard computing platform 202 includes a processor 212 (also referred to as a microcontroller unit or a controller) and memory 214. In the illustrated example, processor 212 of the onboard computing platform 202 is structured to include the controller 212-1. In other examples, the controller 212-1 is incorporated into another ECU with its own processor and memory. The processor 212 may be any suitable processing device or set of processing devices such as, but not limited to, a microprocessor, a microcontroller-based platform, an integrated circuit, one or more field programmable gate arrays (FPGAs), and / or one or more application-specific integrated circuits (ASICs). The memory 214 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and / or high-capacity storage devices (e.g., hard drives, solid state drives, etc.). In some examples, memory 214 includes multiple kinds of memory, particularly volatile memory, and non-volatile memory. Memory 214 is computer readable media on which one or more sets of instructions, such as the software for operating the methods of the present disclosure, can be embedded. The instructions may embody one or more of the methods or logic as described herein. For example, the instructions reside completely, or at least partially, within any one or more of the memory 214, the computer readable medium, and / or within the processor 212 during execution of the instructions.

The HMI unit 204 provides an interface between the vehicle and a user. The HMI unit 204 includes digital and / or analog interfaces (e.g., input devices and output devices) to receive input from, and display information for, the user(s). The input devices include, for example, a control knob, an instrument panel, a digital camera for image capture and / or visual command recognition, a touch screen, an audio input device (e.g., cabin microphone), buttons, or a touchpad. The output devices may include instrument cluster outputs (e.g., dials, lighting devices), haptic devices, actuators, a display 216 (e.g., a heads-up display, a center console display such as a liquid crystal display (LCD), an organic light emitting diode (OLED) display, a flat panel display, a solid state display, etc.), and / or a speaker 218. For example, the display 216, the speaker 218, and / or other input and output device(s) of the HMI unit 204 are operable to emit an alert, such as an alert to request manual takeover to an operator (e.g., a driver) of the vehicle. Further, the HMI unit 204 of the illustrated example includes hardware (e.g., a processor or controller, memory, storage, etc.) and software (e.g., an operating system, etc.) for an infotainment system that is presented via display 216.

Sensors 206 are arranged in and / or around the vehicle to monitor properties of the vehicle and / or an environment in which the vehicle is located. One or more of the sensors 206 may be mounted to measure properties around an exterior of the vehicle. Additionally, or alternatively, one or more of sensors 206 may be mounted inside a cabin of the vehicle or in a body of the vehicle (e.g., an engine compartment, wheel wells, etc.) to measure properties of the vehicle and / or interior sensing of the vehicle. For example, the sensors 206 include accelerometers, odometers, tachometers, pitch and yaw sensors, wheel speed sensors, microphones, tire pressure sensors, biometric sensors, ultrasonic sensors, infrared sensors, Light Detection and Ranging (LIDAR / lidar), Radio Detection and Ranging System (radar), Global Positioning System (GPS), millimeter wave (mmWave) sensors, cameras and / or sensors of any other suitable type. In the illustrated example, sensors 206 include the object detection sensors that are operable to monitor object(s) located within a surrounding area of the vehicle. Sensors may comprise object detection sensors 206-1 such as LIDAR, radar, cameras, ultrasonic sensors, GPS sensors, etc., to detect distances between the vehicle and an object or target in its vicinity.

According to an embodiment, the system comprises sensors associated with the vehicle, sensors associated with the trailer, and the sensors associated with the object or load on the trailer.

According to an embodiment of the system, the one or more resources available with the object comprise one or more of a battery and a fuel. According to an embodiment of the system, the one or more resources available with the item comprises a battery.

According to an embodiment of the system, the one or more sensors associated with the object provide data about one or more of the surrounding vehicles, and road condition data. According to an embodiment of the system, the one or more sensors associated with the item provide data about one or more of the surrounding vehicles, and a road condition data. According to an embodiment of the system, the active data further comprises data from one or more sensors associated with the vehicle, and one or more sensors associated with an object.

According to an embodiment of the system, the one or more sensors associated with the item comprise one or more of a magnetic sensor, a proximity sensor, a load sensor, an electrical sensor, and a vision sensor, a motion sensor, a temperature sensor, and a GPS sensor. According to an embodiment of the system, the one or more sensors associated with the vehicle comprises one or more of a magnetic sensor, a proximity sensor, a load sensor, an electrical sensor, and a vision sensor, a motion sensor, a temperature sensor, and a GPS sensor.

According to an embodiment of the system, the one or more sensors associated with the vehicle comprises a camera coupled with a computer vision system. According to an embodiment of the system, the one or more sensors associated with the vehicle is mounted on the vehicle such that a change in a sensor data is used to detect that the item is attached to the vehicle.

The ECUs 208 monitor and control the subsystems of the vehicle. For example, the ECUs 208 are discrete sets of electronics that include their own circuit(s) (e.g., integrated circuits, microprocessors, memory, storage, etc.) and firmware, sensors, actuators, and / or mounting hardware. The ECUs 208 communicate and exchange information via a vehicle data bus (e.g., the vehicle data bus 210). Additionally, the ECUs 208 may communicate properties (e.g., status of the ECUs, sensor readings, control state, error, and diagnostic codes, etc.) and / or receive requests from each other. For example, the vehicle may have dozens of the ECUs that are positioned in various locations around the vehicle and are communicatively coupled by the vehicle data bus 210.

In the illustrated example, the ECUs 208 include the autonomy unit 208-1 and a body control module 208-2. For example, the autonomy unit 208-1 is operable to perform autonomous and / or semi-autonomous driving maneuvers (e.g., defensive driving maneuvers) of the vehicle based upon, at least in part, instructions received from the controller 212-1 and / or data collected by the sensors 206 (e.g., range-detection sensors). Further, the body control module 208-2 controls one or more subsystems throughout the vehicle, such as power windows, power locks, an immobilizer system, power mirrors, etc. For example, the body control module 208-2 includes circuits that drive one or more relays (e.g., to control wiper fluid, etc.), brushed direct current (DC) motors (e.g., to control power seats, power locks, power windows, wipers, etc.), stepper motors, LEDs, safety systems (e.g., seatbelt pretensioner, air bags, etc.), etc.

The vehicle data bus 210 communicatively couples the communication module 220, the onboard computing platform 202, the HMI unit 204, the sensors 206, and the ECUs 208. In some examples, the vehicle data bus 210 includes one or more data buses. The vehicle data bus 210 may be implemented in accordance with a controller area network (CAN) bus protocol as defined by International Standards Organization (ISO) 11898-1, a Media Oriented Systems Transport (MOST) bus protocol, a CAN flexible data (CAN-FD) bus protocol (ISO 11898-7) and/a K-line bus protocol (ISO 9141 and ISO 14230-1), and / or an Ethernet^{™} bus protocol IEEE 802.3 (2002 onwards), etc.

The communication module for nearby devices 220-1 is operable to communicate with other nearby communication devices. In the illustrated example, communication module 220 includes a dedicated short-range communication (DSRC) module . A DSRC module includes antenna(s), radio(s) and software to communicate with nearby vehicle(s) via vehicle-to-vehicle (V2V) communication, infrastructure-based module(s) via vehicle-to-infrastructure (V2I) communication, and / or, more generally, nearby communication device(s) (e.g., a mobile device-based module) via vehicle-to-everything (V2X) communication.

V2V communication allows vehicles to share information such as speed, position, direction, and other relevant data, enabling them to cooperate and coordinate their actions to improve safety, efficiency, and mobility on the road. V2V communication can be used to support a variety of applications, such as collision avoidance, lane change assistance, platooning, and traffic management. It may rely on dedicated short-range communication (DSRC) and other wireless protocols that enable fast and reliable data transmission between vehicles. V2V communication, which is a form of wireless communication between vehicles, allows vehicles to exchange information and coordinate with other vehicles on the road. V2V communication enables vehicles to share data about their location, speed, direction, acceleration, and braking with other nearby vehicles, which can help improve safety, reduce congestion, and enhance the efficiency of transportation systems.

V2V communication is typically based on wireless communication protocols such as Dedicated Short-Range Communications (DSRC) or Cellular Vehicle-to-Everything (C-V2X) technology. With V2V communication, vehicles can receive information about potential hazards, such as accidents or road closures, and adjust their behavior accordingly. V2V communication can also be used to support advanced driver assistance systems (ADAS) and automated driving technologies, such as platooning, where a group of vehicles travel closely together using V2V communication to coordinate their movements.

More information on the DSRC network and how the network may communicate with vehicle hardware and software is available in the U.S. Department of Transportation's Core June 2011 System Requirements Specification (SyRS) report (available at http://wwwits.dot.gov/meetings/pdf/CoreSystemSESyRSRev A%20(2011-06-13).pdf). DSRC systems may be installed on vehicles and along roadsides on infrastructure. DSRC systems incorporating infrastructure information are known as "roadside" systems. DSRC may be combined with other technologies, such as Global Position System (GPS), Visual Light Communications (VLC), Cellular Communications, and short-range radar, facilitating the vehicles communicating their position, speed, heading, relative position to other objects and to exchange information with other vehicles or external computer systems. DSRC systems can be integrated with other systems such as mobile phones. Currently, the DSRC network is identified under the DSRC abbreviation or name. However, other names are sometimes used, usually related to a Connected Vehicle program or the like. Most of these systems are either pure DSRC or a variation of the IEEE 802.11 wireless standard. However, besides the pure DSRC system it is also meant to cover dedicated wireless communication systems between vehicles and roadside infrastructure systems, which are integrated with GPS and are based on an IEEE 802.11 protocol for wireless local area networks (such as 802. 1 1p, etc.).

Additionally, or alternatively, the communication module for external networks 220-2 includes a cellular vehicle-to-everything (C-V2X) module. A C-V2X module includes hardware and software to communicate with other vehicle(s) via V2V communication, infrastructure-based module(s) via V2I communication, and / or, more generally, nearby communication devices (e.g., mobile device-based modules) via V2X communication. For example, a C-V2X module is operable to communicate with nearby devices (e.g., vehicles, roadside units, mobile devices, etc.) directly and / or via cellular networks. Currently, standards related to C-V2X communication are being developed by the 3^{rd} Generation Partnership Project.

Further, the communication module 220-2 is operable to communicate with external networks. For example, the communication module 220-2 includes hardware (e.g., processors, memory, storage, antenna, etc.) and software to control wired or wireless network interfaces. In the illustrated example, the communication module 220-2 includes one or more communication controllers for cellular networks (e.g., Global System for Mobile Communications (GSM), Universal Mobile Telecommunications System (UMTS), Long Term Evolution (LTE), Code Division Multiple Access (CDMA)), Near Field Communication (NFC) and / or other standards-based networks (e.g., WiMAX (IEEE 802.16m), local area wireless network (including IEEE 802.11 a/b/g/n/ac or others), Wireless Gigabit (IEEE 802.11ad), etc.). In some examples, the communication module for external networks 220-2 includes a wired or wireless interface (e.g., an auxiliary port, a Universal Serial Bus (USB) port, a Bluetooth^{®} wireless node, etc.) to communicatively couple with a mobile device (e.g., a smart phone, a wearable, a smart watch, a tablet, etc.). In such examples, the vehicle may communicate with the external network via the coupled mobile device. The external network(s) may be a public network, such as the Internet; a private network, such as an intranet; or combinations thereof, and may utilize a variety of networking protocols now available or later developed including, but not limited to, TCP/IP-based networking protocols.

In an embodiment of the system, the communication between the vehicle and the trailer is via Vehicle-to-Vehicle (V2V) communication. In an embodiment of the system, the Vehicle-to-Vehicle (V2V) communication is based on wireless communication protocols using at least one of a Dedicated Short-Range Communications (DSRC), and a Cellular Vehicle-to-Everything (C-V2X) technology. In an embodiment of the system, the communication between the host vehicle and the trailer is via an internet connection. In an embodiment, the communication module is enabled for an autonomous communication, wherein the autonomous communication comprises communication over a period with minimal supervision under different scenarios. The communication module comprises a hardware component comprising, a vehicle gateway system comprising a microcontroller, a transceiver, a power management integrated circuit, an Internet of Things device capable of transmitting one of an analog and a digital signal over one of a telephone, a communication, either wired or wirelessly.

The autonomy unit 208-1 of the illustrated example is operable to perform autonomous and / or semi-autonomous driving maneuvers, such as defensive driving maneuvers, for the vehicle. For example, the autonomy unit 208-1 performs the autonomous and / or semi-autonomous driving maneuvers based on data collected by the sensors 206. In some examples, the autonomy unit 208-1 is operable to operate a fully autonomous system, a park-assist system, an advanced driver-assistance system (ADAS), and / or other autonomous system(s) for the vehicle.

An ADAS is operable to assist a driver to safely operate the vehicle. For example, the ADAS is operable to perform adaptive cruise control, collision avoidance, lane-assist (e.g., lane centering), blind-spot detection, rear-collision warning(s), lane departure warnings and / or any other function(s) that assist in operating the vehicle. To perform the driver-assistance features, the ADAS monitors objects (e.g., vehicles, pedestrians, traffic signals, etc.) and develops situational awareness around the vehicle. For example, the ADAS utilizes data collected by the sensors 206, the communication module 220-1 (e.g., from other vehicles, from roadside units, etc.), the communication module 220-2 from a remote server, and / or other sources to monitor the nearby objects and develop situational awareness. In an embodiment, the system sets the values of the safety zone using the vehicle combination parameters and generates warnings based on the values of the vehicle combination rather than the vehicle alone.

Further, in the illustrated example, controller (or control module) 212-1 is operable to monitor an ambient environment of the vehicle. For example, to enable the autonomy unit 208-1 to perform autonomous and / or semi-autonomous driving maneuvers, the controller 212-1 collects data that is collected by sensors 206 of the vehicle. In some examples, the controller 212-1 collects location-based data via the communication module 220-1 and / or another module (e.g., a GPS receiver) to facilitate the autonomy unit 208-1 in performing autonomous and / or semi-autonomous driving maneuvers. Additionally, the controller 212-1 collects data from (i) adjacent vehicle(s) via the communication module 220-1 and V2V communication and / or (ii) roadside unit(s) via the communication module 220-1 and V2I communication to further facilitate the autonomy unit 208-1 in performing autonomous and / or semi-autonomous driving maneuvers.

In operation, according to an embodiment, the communication module 220-1 performs V2V communication with an adjacent vehicle. For example, the communication module 220-1 collects data from the adjacent vehicle that identifies (i) whether the adjacent vehicle includes an autonomous and / or semi-autonomous system , (ii) whether the autonomous and / or semi-autonomous system is active, (iii) whether a manual takeover request of the autonomous and / or semi-autonomous system has been issued, (iv) lane-detection information of the adjacent vehicle, (v) a speed and / or acceleration of the adjacent vehicle, (vi) a (relative) position of the adjacent vehicle, (vii) a direction-of-travel of the adjacent vehicle, (viii) a steering angle rate-of-change of the adjacent vehicle, (ix) dimensions of the adjacent vehicle, (x) whether the adjacent vehicle is utilizing stability control system(s) (e.g., anti-lock braking, traction control, electronic stability control, etc.), and / or any other information that facilitates the controller 212-1 in monitoring the adjacent vehicle.

Based at least partially on the data that the communication module 220-1 collects about the adjacent vehicle via V2V communication, the controller 212-1 can determine a collision probability with the adjacent vehicle. For example, the controller 212-1 determines a collision probability with the adjacent vehicle in response to identifying a manual takeover request within the data collected by the communication module 220-1 from the adjacent vehicle. Additionally, or alternatively, the controller 212-1 determines a collision probability with the adjacent vehicle in response to identifying a discrepancy between (i) lane-marker locations determined by the controller 212-1 of the vehicle based on the sensors 206 and (ii) lane-marker location determined by the adjacent vehicle. Further, in some examples, the controller 212-1 determines the collision probability with the adjacent vehicle based on data collected from other sources, such as the sensors 206, e.g., range detector sensors 206-1 and / or other sensor(s) of the vehicle, roadside unit(s) in communication with the communication module 220-1 via V2I communication, and / or remote server(s) in communication with the communication module 220-2.

In some examples, controller 212-1 determines the collision probability based on a takeover time for the adjacent vehicle and / or a time-to-collision of the adjacent vehicle. For example, the takeover time corresponds with a duration of time between (1) the adjacent vehicle emitting a request for a manual takeover to be performed and (2) an operator of the adjacent vehicle manually taking over control of the adjacent vehicle. The controller 212-1 is operable to determine the takeover time of the adjacent vehicle based on measured characteristics of the vehicle combination and measured characteristics of the adjacent vehicle (e.g., velocity, acceleration, dimensions, etc.), the operator of the adjacent vehicle (e.g., a measured reaction time, etc.), and / or an environment of the adjacent vehicle (e.g., road conditions, weather conditions, etc.). Further, the time-to-collision corresponds with the time it would take for the adjacent vehicle to collide with another vehicle (e.g., a third vehicle) and / or object (e.g., a guardrail, a highway lane divider, etc.) if the current conditions were maintained.

Upon determining the collision probability of the adjacent vehicle and determining that the collision probability is not as per threshold, the autonomy unit 208-1 autonomously performs (e.g., for the ADAS) a defensive driving maneuver to prevent the vehicle from being involved in a collision caused by the adjacent vehicle. For example, the autonomous defensive driving maneuver includes deceleration, emergency braking, changing of lanes, changing of position within a current lane of travel, etc. In some examples, the autonomy unit 208-1 is operable to initiate the defensive driving maneuver before the takeover time of the adjacent vehicle has been completed. That is, the controller 212-1 is operable to cause the autonomy unit 208-1 to perform the defensive driving maneuver before the operator of the adjacent vehicle manually takes over control of the adjacent vehicle. Further, in some examples, the controller 212-1 emits an audio, visual, haptic, and / or other alert (e.g., via an HMI unit 204) for the operator of the vehicle to request manual takeover in response to determining that the collision probability is less than the first threshold and greater than the second threshold. By emitting such an alert, controller 212-1 enables the operator of the vehicle to safely take control of the vehicle before the adj acent vehicle is potentially involved in a collision. Additionally, or alternatively, the controller 212-1 is operable to perform other defensive measures (e.g., prefilling brake fluid lines) in response to determining that the collision probability is greater than a threshold (e.g., the second threshold, a third threshold).

The communication module enables in-vehicle communication, communication with other vehicles, infrastructure communication, grid communication, etc., using Vehicle to network (V2N), Vehicle to infrastructure (V2I), Vehicle to vehicle (V2V), Vehicle to cloud (V2C), Vehicle to pedestrian (V2P), Vehicle to device (V2D), Vehicle to grid (V2G) communication systems. Then, the system notifies nearby or surrounding vehicles or vehicles communicating with the vehicle's communication module. The vehicle uses, for example, a message protocol, a message that goes to the other vehicles via a broadcast.

In an embodiment, a connection is established between a vehicle and the attachment such as a trailer. A trailer is detected by the vehicle control system. The trailer is detected by exchanging handshaking signals. Handshaking is the automated process for negotiation of setting up a communication channel between entities. The processor sends a start signal through the communication channel in order to detect a trailer or attachment. If there is a trailer or attachment, the processor may receive an acknowledgement signal from the trailer or attachment. Upon receiving the acknowledgement signal, the processor establishes a secured connection with the trailer or attachment. The processor may receive a signal at the communication module from the trailer or attachment. The processor may further automatically determine the origin of the signal. The processor communicatively connects the communication module to the trailer or attachment. Then the processor is operable to send and / or receive a message to and / or from the trailer or attachment. The signals received by the communication module may be analyzed to identify the origin of the signal to determine the location of the trailer or attachment.

In an embodiment, the system is enabled for bidirectional communication. The system or vehicle sends a signal and then receives a signal/communication from the trailer or attachment. As a first step of the method according to the disclosure, a data link between the vehicle and the external device, which may be the trailer or attachment, is set up in order to permit data to be exchanged between the vehicle and the trailer or attachment in the form of a bidirectional communication. This can take place, for example, via a radio link or a data cable. It is therefore possible for the trailer or attachment to receive data from the vehicle or for the vehicle to request data from the trailer or attachment.

In an embodiment, bidirectional communication comprises the means for data acquisitions and are designed to exchange data bidirectionally with one another. In addition, at least the vehicle comprises the logical means for gathering the data and arranging it to a certain protocol based on the receiving entity's protocol. Initially, a data link for bidirectional communication is set up. The vehicle and the trailer or attachment can communicate with one another via this data link and therefore request or exchange data, wherein the data link can be implemented, for example, as a cable link or radio link. Bidirectional communication has various advantages as described herein. In various embodiments, data is communicated and transferred at a suitable time interval, including, for example, 200 millisecond (ms) intervals, 100 ms intervals, 50 ms intervals, 20 ms intervals, 10 ms intervals, or even more frequent and / or in real-time or near real-time, in order to allow a vehicle to respond to, or otherwise react to, data. Bidirectional communication may be used to facilitate data exchange.

In an embodiment, the vehicle may transmit a message via a communication link. It can be using any combination of vehicle to vehicle (V2V), vehicle to everything (V2X) or vehicle to infrastructure (V2I) type of communication. In an embodiment, it uses vehicle-to-vehicle (V2V) communication that enables vehicles to wirelessly exchange information (communicate), for example, about their speed, location, and heading.

In an embodiment, messaging protocols comprise at least one of Advanced Message Queuing Protocol (AMQP), Message Queuing Telemetry Transport (MQTT), Simple (or Streaming) Text Oriented Message Protocol (STOMP), MQTT-S (an extension of the open publish/subscribe MQTT), which are heavily used in IoT based technologies and edge networks.

In an embodiment of the system, the vehicle is operable to establish a communication via a communication module with the trailer or attachment to obtain specification of the trailer or attachment, wherein the specification comprises size and weight of the trailer or attachment. In an embodiment of the system, information about the trailer or attachment is obtained using a longitudinal accelerometer sensor, a GPS, an Inertial Measurement Unit (IMU), a LIDAR, a radar, and a camera. In an embodiment of the system, the communication between the vehicle and the trailer or attachment is via Vehicle-to-Vehicle (V2V) communication. In an embodiment of the system, V2V communication is based on wireless communication protocols using at least one of a Dedicated Short-Range Communications (DSRC), and a Cellular Vehicle-to-Everything (C-V2X) technology. In an embodiment of the system, the communication between the vehicle and the trailer or attachment is via an internet connection.

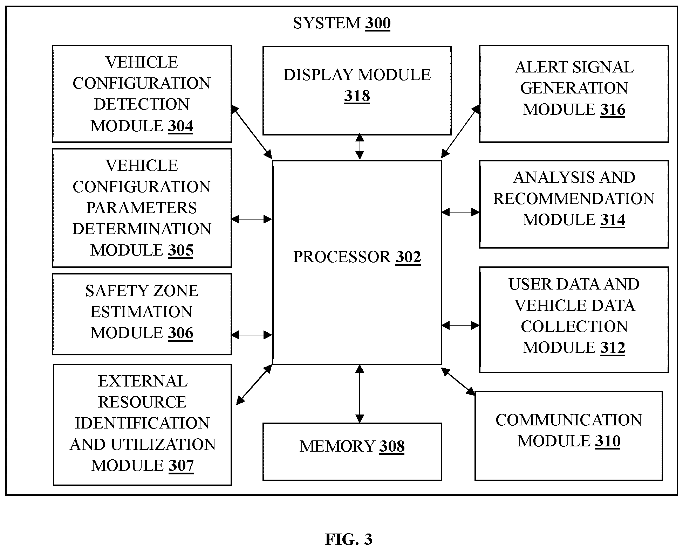

FIG. 3 shows the block diagram of the system 300 and its components for detecting a change in vehicle configuration and estimating the safety zone according to an embodiment. The system comprises a processor 302, vehicle configuration detection module 304, vehicle configuration parameters determination module 305, safety zone estimation module 306, external resource identification and utilization module 307, memory 308, communication module 310, user data and vehicle data collection module 312, analysis and recommendation module 314, alert signal generation module 316, and display module 318.

Processor 302 may be a high-performance, multi-core CPU or system-on-chip (SoC) solution to process vast amounts of data from various sensors that may be used. Processor 302 processes data from sensors, such as cameras, LIDAR, radar, and other inputs to make real-time decisions, recommendations, and to execute control actions for the vehicle. Processor 302 may comprise Graphics Processing Units (GPUs). GPUs are utilized for their ability to accelerate tasks like image and sensor data processing. Some vehicles may incorporate Field-Programmable Gate Arrays (FPGAs) to efficiently perform specialized computations, while others might leverage Application-Specific Integrated Circuits (ASICs) for optimized functions. The choice of processor depends on factors such as the vehicle's level of autonomy, processing requirements, power consumption, and thermal considerations. Processors, also known as central processing units (CPUs), are the heart and brain of any computer or electronic device capable of executing instructions. Processor or processors' function is to process data and perform calculations, etc. At the core of their operation lies data processing, where they handle arithmetic and logical operations on data stored in memory. CPUs execute instructions, which are sets of specific operations encoded in machine language, to perform various tasks. The control unit within, or interacting with, the processor manages and coordinates the execution of instructions, fetching them from memory, decoding them, and directing the appropriate components to execute the instruction. To ensure a controlled and orderly flow of tasks, processors use an internal clock that generates regular electrical pulses, synchronizing their operations through clock cycles. Processors support multitasking environments, rapidly switching between executing different tasks for various applications. Additionally, they may work with the operating system to manage virtual memory, allowing programs to access more memory than is physically available, and to efficiently manage memory usage. Processor or processors may be integrated with security features, including hardware-level encryption, memory protection, and support for secure execution environments, enhancing the system's security against potential threats. The processor may run sophisticated algorithms and artificial intelligence (AI) software to analyze sensor data, detect obstacles, interpret the environment, and help in decision making to navigate the vehicle. Its high-performance capabilities and parallel processing help ensure the vehicle can perceive and respond to its surroundings quickly and accurately. In an embodiment, the processor may be a neuromorphic processor, inspired by the human brain, which offers a unique approach to handling AI tasks. The processor interacts and exchanges data with one or more of the other components or modules of the system, for example, vehicle configuration detection module 304, vehicle configuration parameters determination module 305, safety zone estimation module 306, external resource identification and utilization module 307, memory 308, communication module 310, user data and vehicle data collection module 312, analysis and recommendation module 314, alert signal generation module 316, and display module 318, as shown in FIG.3.

Vehicle configuration detection module 304 comprises various sensors which are operable for detecting any change in the vehicle configuration. Vehicle configuration refers to the specific arrangement and combination of components and features of the vehicle. It includes adding or deleting items that can significantly impact the vehicle's overall performance, including its range and /or dimensions. Adding weight to a vehicle, such as trailers, dollies, bikes, boats, extra cargo above the vehicle, will increase its overall dimensions and overall mass. Further, a place of attachment of the items, i.e., whether the bike is added behind the vehicle or the bike is added above the vehicle in a luggage carriage changes the weight, aerodynamics, friction on the tires which influence the vehicle overall parameters such as length, width, height, and weight. Similarly, the modes of attachment for a trailer to a vehicle include ball hitch, fifth wheel hitch, pintle hitch, gooseneck hitch, and receiver hitch; such choice of attachment can influence the towing vehicle's safety zone based on turning radius guided by the type of joint. Factors such as dimensions of the trailer, dimensions of the load on the trailer, weight of the trailer and the load, influence the safety zone. A heavier and longer vehicle requires more distance from other vehicles i.e., safety zone. Therefore, the vehicle configuration detection module 304 detects vehicle configuration, whether trailer attachments are present, whether a trailer is added, whether a luggage carrier is present and whether luggage is added in the carrier, whether additional items are added to the trailer, etc.

In an embodiment, a trailer identification system for a vehicle is disclosed. The system includes an imaging device operable to capture image data depicting a trailer and a user interface operable to communicate with a user. The processor processes the image data and applies a trailer detection model operable to detect a trailer depicted in the image data. The processor activates a detection module for the trailer and captures the image data of the trailer from a plurality of perspectives relative to the trailer such that a size and shape of the trailer can be captured. According to an embodiment, it is a method for trailer detection for a vehicle trailer detection system, the method comprising the steps of identifying a trailer in image data via a trailer detection model, activating a detection routine for the trailer; capturing the image data of the trailer from a plurality of perspectives relative to the trailer, and generating a size and shape estimation of the trailer.

There are several ways to detect whether a vehicle has a trailer attached. Detection can take place using a Vision System comprising image sensors. The image sensors may be mounted on the back of the towing vehicle or on the rear-view mirrors. The system may further determine the length, width, height, and shape of the trailer. Further it may estimate the weight of the system based on the material, shape, and volume. In an embodiment, the size and shape of the trailer may be detected using various sensors that are disposed strategically in and on the vehicle.

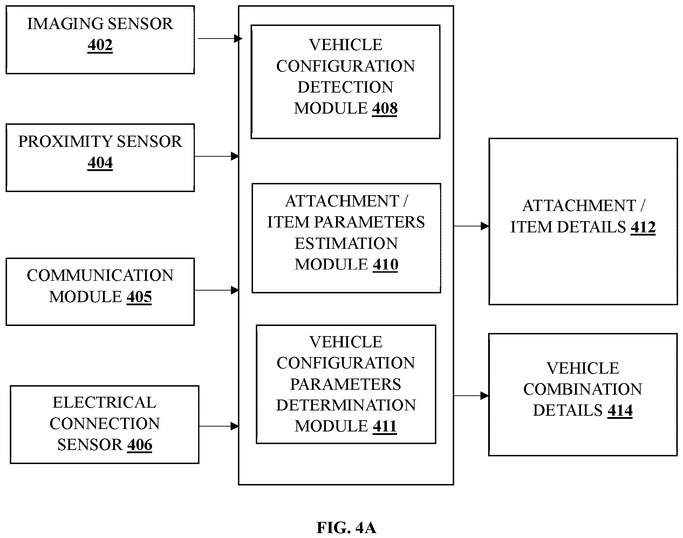

FIG. 4A shows a system with a vehicle configuration detection module 408 and vehicle configuration parameters determination module 411 according to an embodiment. The system comprises imaging sensor 402, proximity sensor 404, communication module 405, and electrical connection sensor 406 positioned such that they detect the trailer that is being added to the vehicle. The vehicle configuration detection module 408 may comprise a computer vision system and analyzes the input from one or more sensors, using sensor fusion technique, and determines the current configuration. According to an embodiment of the system, the system further comprises one or more sensors. According to an embodiment of the system, the one or more sensors comprise a magnetic sensor, a proximity sensor, a load sensor, an electrical sensor, and a vision sensor. According to an embodiment of the system, the one or more sensors comprise a camera coupled with a computer vision system. According to an embodiment of the system, the one or more sensors are mounted on the vehicle such that a change in data from the sensor is used to detect that the item is being moved or being attached to the vehicle.

In an embodiment, the communication module 405 may receive a message from the attachment sending the details to the vehicle. Based on the configuration, imaging sensor 402, proximity sensor 404, electrical connection sensor 406 are further used to gather more data about the attachment. There may be one or more sensors of the same kind placed at various positions on the vehicle to gather data of the item or the attachment/trailer. Once the data is gathered, the attachment/item parameters estimation module 410, comprising various artificial intelligence algorithms or data based models, may estimate the parameters of the item. The attachment/item details 412 are provided from the attachment/item parameters estimation module 410. These details or parameters related to the attachment may include but are not limited to size including make and model, length, height, width or breadth, shape, weight, color, and other details, as necessary. Further, the details may include the details relating to the load or object that is being carried by the trailer such as make and model of the object, length, height, width or breadth, shape, weight, color, and other details, as necessary. Vehicle configuration parameters determination module 411 gathers the data from the communication module 405, vehicle configuration detection module 408, attachment/item parameters estimation module 410 and determines the current vehicle configuration details which comprises overall length, overall height, overall width, overall weight of the vehicle combination, wherein the vehicle combination is vehicle and trailer along with the load it is carrying.

Overall length of the attachment is a measure from the frontmost point of the towing vehicle to the rearmost point of the load or attachment. Similarly, overall attachment width is a measure of the widest point of the entire assembly, including both the towing vehicle and the load or attachment. Overall height is a measure from the ground to the highest point of the entire combination assembly. If the load or attachment adds height, measure from the ground to the highest part of the load or attachment. Overall attachment weight is computed using towing vehicles weight, weight of the attachment and the load, tongue weight (which is a downward force exerted on the hitch ball by the trailer coupler), and gross combined weight rating (GCWR) which is the maximum allowable total weight of the towing vehicle, passengers, cargo, trailer, and anything that is being towed. The system also makes sure that the gross combined attachment weight rating is within the manufacturer's specification. If the GCWR exceeds the manufacturer's limit, then the system provides an alert to the user. The system may further check for Gross Vehicle Weight Rating (GVWR), Gross Axle Weight Rating (GAWR), Gross Trailer Weight (GTW), Tongue Weight (TW), and weight distribution limits as per the manufacturer's specification. Once the system carries out the checks it provides the vehicle combination details 414 of overall height, overall length, overall width, overall weight. In an embodiment, the vehicle receives a message from the trailer via the communication module 405 comprising the specification of the trailer and the specification of the object it is carrying. The specification of the trailer may comprise a manufacturer's specification detail of the trailer along with its capabilities, sensors, and their location, etc. The specification of the object may comprise a manufacturer's specification detail of the object along with its capabilities, sensors, and their location, etc. Vehicle configuration parameters determination module 411 may take the message, decode the details of the trailer and the object, may retrieve vehicle manufacturer's details from the database, receive the sensors data associated with the vehicle such as images of the trailer and its load, process the sensors data, receive specification details associated with the trailer, and the specification details associated with the object on the trailer. It then computes vehicle combination details 414 which may comprise one or more of overall length, overall width, overall height, overall weight, and capabilities/resources associated with the trailer, sensors associated with the trailer, capabilities/ resources associated with the object, and sensors associated with the object.

Radar and LIDAR may be proximity sensors 404 that are capable of detecting nearby objects, including trailers, however they need to be properly configured and positioned on the vehicle. Radar sensors use radio waves to detect objects, and when a trailer is attached to the vehicle, the radar can detect it as a separate object in its detection range. Based on the distance and speed, it can be correlated as connected with the vehicle itself. Similarly, when a trailer is attached to the vehicle, the LIDAR can detect it as an additional object within its field of view. The LIDAR can capture the shape and position of the trailer accurately, providing valuable data for the vehicle's perception and decision-making systems. In an embodiment, camera, radar, and LIDAR sensors may work together to ensure that the vehicle can detect and recognize objects, such as trailers attached to it.

When a trailer is attached to a vehicle, it becomes an extension of the vehicle itself and forms a vehicle combination. Ultrasonic sensors, positioned on the rear bumper or sides of the vehicle, can detect the presence of the trailer and the distance between the vehicle and the trailer. These sensors emit ultrasonic pulses and measure the time it takes for the pulses to bounce back after hitting an object. By analyzing the time delay, the sensor can calculate the distance to the trailer. Vehicles are commonly equipped with trailer hitches that enable the vehicle to be connected to, and tow, a trailer. In many trailer coupling arrangements, the trailer has a coupler which usually engages and can be connected to the trailer coupling of the vehicle via a coupling ball. The coupler typically includes a coupler lock that is actuated by a user by operating a coupler lock lever between a locked and an unlocked position. In an embodiment, sensors are placed near the coupler such that they are operable to detect that the vehicle and a trailer are in a connected state. According to an embodiment, the vehicle includes a trailer hitch, a vehicle electrical connector operable to be electrically connected to a trailer electrical connector, and an imaging system adapted to capture images near the trailer hitch and images of the trailer.

In an embodiment, capacitance-based sensors are used. One common implementation of capacitance-based sensors for trailer detection is through the use of electrical connectors. Many trailers have electrical connectors that plug into corresponding receptacles on the towing vehicle. These connectors are used to transfer electrical signals for lighting and other systems on the trailer. Capacitance sensors can detect the presence of a connected trailer by monitoring changes in capacitance when the electrical connector is plugged in or disconnected. When the trailer is attached, the electrical system of the vehicle and the trailer are electrically connected, causing a change in the capacitance. The sensor can detect this change and determine that a trailer is connected. In an embodiment, mmWave radar sensors can be used to detect trailers attached to a vehicle, particularly when the trailer has sufficient reflective surfaces, such as metal parts. Such metal reflective surfaces can be provided on the trailers for detection purposes. MmWave radar sensors operate by emitting electromagnetic waves in the millimeter-wave frequency range and then measuring the time it takes for the waves to bounce back after hitting an object. The radar sensor can analyze the reflected signals to detect and track objects in the vehicle's vicinity.

Once the trailer is detected, its size, shape, weight, load details, etc., information can be accessed via Radio Frequency Identification Chip (RFID) technology, wherein an RFID tag comprises information on a size, a shape, and a weight of the item and an RFID reader is associated with the vehicle. In an embodiment, the details of the trailer such as size, shape, height, etc., can be estimated via an image or images captured using one or more cameras. To enhance overall object detection and object geometric estimation capabilities, the system may use a combination of different sensor technologies, including cameras, radars, and LIDARs. This sensor fusion approach allows the system to leverage the strengths of each sensor type and provide comprehensive perception of the detection of the attached trailer as well as further details of the trailer relating to shape, size, height, weight, color, model, make, including the cargo or load the trailer is carrying, etc.

In an embodiment, a trailer may be detected using a bounding box method. In an embodiment, parts of the vehicle are detected using the bounding box method. For example, results of a bounding box method are used to detect a frame of a trailer. In an embodiment, the computer vision system may be utilizing both 2D and 3D methods in a hierarchical manner to first select regions of interest quickly, then it may try to gain more insight about the object with a 3D bounding box.

Sensor fusion is the process of combining data from multiple sensors to improve the accuracy, reliability, and efficiency of the information collected. It involves integrating information from various sources, such as cameras, radar, LIDAR, and other sensors, to obtain a more complete and more accurate picture of the environment. Sensor fusion may be able to reduce errors and uncertainties that can arise from using a single sensor and to obtain a more comprehensive understanding of the surrounding world. By combining data from multiple sensors, vehicle systems can make more informed decisions and respond to changing conditions in real-time. The process of sensor fusion typically involves several steps, including data acquisition, signal processing, feature extraction, data mining and data association, and estimation. Different algorithms and techniques may be used to integrate the information from multiple sensors, depending on the application and the specific sensors being used.

According to an embodiment, an AI-based trailer detection may be used in combination with sensor fusion techniques. Some of the algorithms that are suitable for trailer detection include, but not limited to: (i) Hough Transform: the Hough Transform algorithm is an approach to object detection that works by identifying straight lines in an image. The Hough Transform can be used to detect the edges of a trailer and to estimate the shape and size of the trailer. (ii) Convolutional Neural Networks (CNNs): CNNs are deep learning algorithms that may be used for trailer detection. A neural network is trained on lane data obtained from various sensors to recognize the features of a trailer, such as size, shape, and texture. In an embodiment, the neural network is trained to estimate a weight of the trailer based on the size and shape. Once the network is trained, it can be used to detect and classify trailers in real-time. (iii) Support Vector Machines (SVMs): SVMs are machine learning algorithms that work by learning a boundary that separates the trailer from the rest of the image. The SVM algorithm can be trained using labeled data to create a model. The model is then used to detect the size and shape of the trailer. (iv) Markov Random Fields (MRFs): MRFs are a probabilistic graphical model that works by modeling the relationship between neighboring pixels in an image to identify the shape and size of the trailer and the load details. MRFs can be combined with other algorithms, such as CNNs or SVMs, to create a more robust and accurate trailer detection system.

According to an embodiment of the system, the system further comprises one or more sensors. According to an embodiment of the system, one or more sensors comprise a magnetic sensor, a proximity sensor, a load sensor, an electrical sensor, and a vision sensor. According to an embodiment of the system, the processor is further operable to sense, via one or more sensors, a change in the configuration of the vehicle. According to an embodiment of the system, one or more sensors comprise a camera coupled with a computer vision system. According to an embodiment of the system, one or more sensors is mounted on the vehicle such that the one or more sensors detect a change in configuration to the vehicle by detecting a change in a sensor data. According to an embodiment of the system, one or more sensors is operable to determine one or more of a size, a shape, and a weight of the one or more items.

According to an embodiment of the system, the system is further operable to detect additional factors. According to an embodiment of the system, the additional factors comprise one or more of a driving condition, and a driving mode . According to an embodiment of the system, the system comprises a non-volatile memory operable to store details of the one or more items, the vehicle, and the new range.

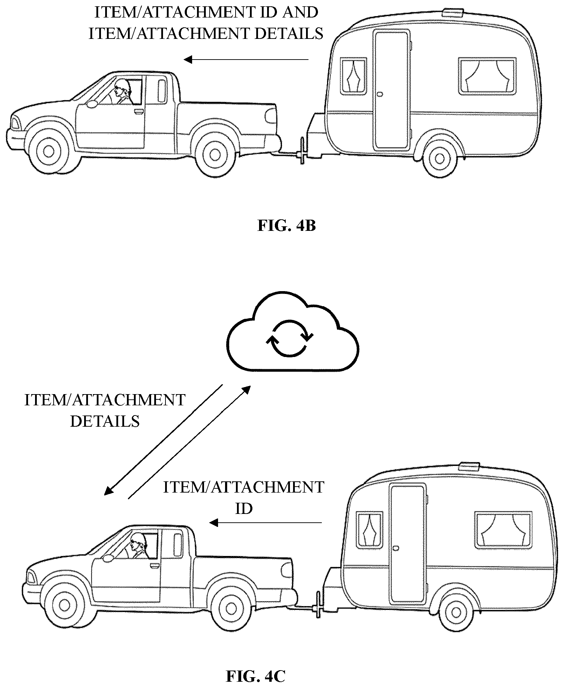

FIG. 4B shows the vehicle obtaining the item or attachment details and cargo details from the item itself according to an embodiment. In an embodiment, the attachment and item details can be directly obtained from the item or attachment itself as shown in FIG. 4B. The item may be a trailer fitted with a Radio Frequency Identification Chip (RFID). The RFID may contain identification and additional details pertaining to the item or attachment such as size, shape, weight, color, technologies it is fitted with, etc. RFID tags or transponders attached to the item or trailer contain a unique identifier and sometimes additional data. These tags are equipped with an antenna that communicates with RFID readers using radio frequency signals. When an RFID tag comes within the range of an RFID reader, which is attached in the vehicle, the reader emits radio waves that power the tag, allowing the RFID tag to transmit its unique identifier back to the reader. The RFID reader then captures the transmitted data and can retrieve additional details or information associated with that particular tag from a database or information system. The details may be password protected and the password may be sent to the user by the RFID tag owner. In an embodiment, the RFID may direct to a website from which additional details may be obtained. In similar fashion an RFID technology may also be used to obtain the details pertaining to the cargo/load that is being carried on the trailer or dolly.

FIG. 4C shows obtaining item or attachment details from the cloud network according to an embodiment. According to this embodiment, an RFID tag may be used to obtain an identification number of the trailer by the vehicle. Using this identification number, the system may obtain the details related to the item or attachment using a cloud network where the information may be stored.

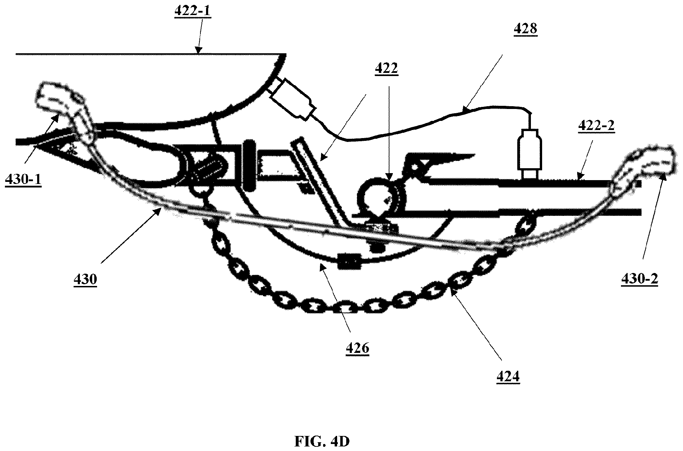

FIG. 4D shows various connections between the trailer and the vehicle according to an embodiment. One of the purposes of attaching a trailer is to increase the overall cargo-carrying capacity of the vehicle, allowing it to transport larger or heavier loads than it could carry on its own. The trailer typically has wheels and can be either single-axle or multi-axle, depending on its size and weight capacity. It may have an open or closed design, and its cargo area can vary in shape and dimensions based on the intended use. Trailers are commonly used to transport items such as furniture, appliances, construction materials, boats, livestock, motorcycles, or other vehicles. The attachment process involves connecting the trailer's hitch to the vehicle's tow hitch receiver. The hitch is a mechanical coupling that enables the trailer to be securely linked to the towing vehicle. The trailer may also have electrical connectors to enable the functioning of lights and brakes on the trailer, synchronized with those of the towing vehicle.

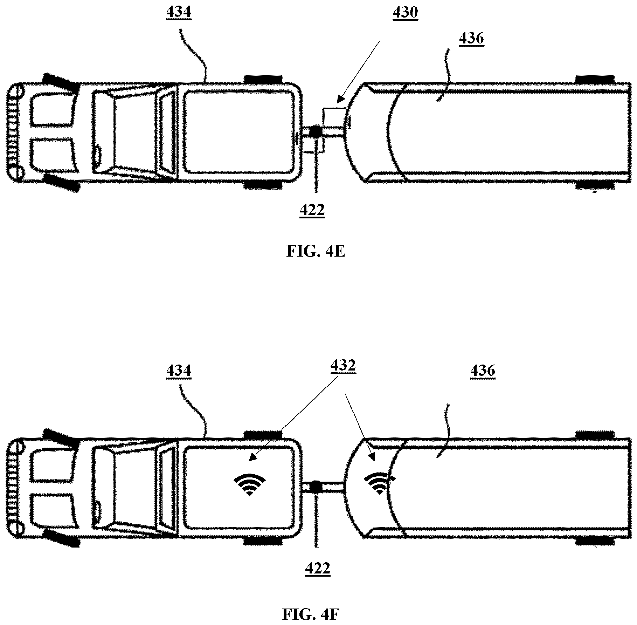

According to an embodiment, the system for attaching a trailer to a vehicle may comprise coupling 422 connecting the vehicle 422-1 and the trailer 422-2. It may further comprise a safety chain 424, a trailer wiring harness 426, and a communication connection 428. The system may further be equipped with charging/discharging cable 430 having ends 430-1 connecting the vehicle (towing vehicle) and 430-2 connecting another battery resource such as another vehicle that is carried on the trailer (towed vehicle). The charging/discharging cable 430 is enabled for V2V charging technologies. In an embodiment it may be a proprietary charging cable enabled with proprietary connection technologies. In another embodiment, the charging cable may be using any of the established standards that may be available. The safety chain 424 is operable to keep the trailer from completely separating from the vehicle if it ever becomes disconnected while towing. A trailer wiring harness 426 at the back of a vehicle allows the vehicle's electrical system to connect to a trailer's electrical system to supply power to the trailer lights and synchronizes them with the vehicle's taillights. The trailer wiring harness can also be operable to connect trailer brakes and auxiliary power. The communication connection 428 could be a wired connection as shown in FIG. 4E that is connecting communicatively the vehicle 434 and the trailer 436 or a wireless communication 432 that is connecting communicatively the vehicle 434 and the trailer 436 as shown in FIG. 4F. Further, FIG. 4E and FIG. 4F show mechanical coupling 422 connecting the vehicle 434 and the trailer 436. Wireless communication encompasses various technologies that enable the transmission of data without the need for physical wires or cables. According to an embodiment, wireless communication includes Wi-Fi', Bluetooth', cellular communication, Radio Frequency Identification (RFID), Near Field Communication (NFC), Satellite communication. These wireless technologies are enabled for seamless connectivity and data sharing.

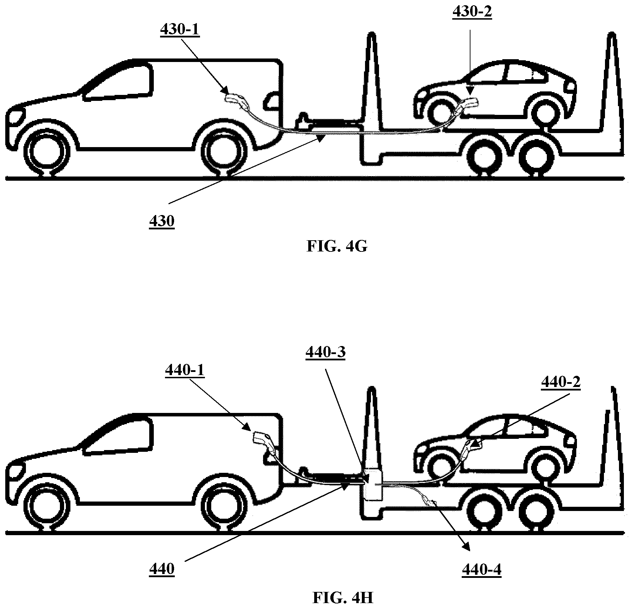

FIG. 4G shows an electrical charging connection between the vehicle and the object on the trailer for using the battery associated with the object according to an embodiment. The charging cable 430 may comprise a first connector 430-1 connected to the first inlet of the first vehicle; a second connector 430-2 connected with the second inlet of the second vehicle; and a cable 430 electrically connecting the first power pin of the first connector 430-1 and the second power pin of the second connector 430-2.

FIG. 4H shows an electrical charging connection between the vehicle and the object on the trailer via the trailer for using the battery associated with the object according to an embodiment. The charging cable 440 may comprise a first connector 440-1 connected to the first inlet of the first vehicle; a second connector 440-2 connected with the second inlet of the second vehicle; and a cable 440 electrically connecting the first power pin of the first connector 440-1 and the second power pin of the second connector 440-2. The first vehicle or the second vehicle may include a supply equipment communication controller (SECC) 440-3 which may determine the state of connection between the first vehicle and the second vehicle. The SECC may further be connected to additional cables 440-4 which may be connected to additional battery sources for charging or discharging. In an embodiment, SECC 440-3 along with charging cable 440 may be part of the trailer. In an embodiment, SECC 440-3 along with charging cable 440 may be part of the first vehicle or the second vehicle.

Supply equipment communication controller (SECC) 440-3 provided in the cable 440 may include a controller for controlling a charging procedure, a communicator for transmitting and receiving data between a control signal or a vehicle, and a power supply for supplying power to the communication controller. The controller may be implemented as a memory for storing data about an algorithm or a program reproducing the algorithm for controlling the inter-vehicle charging, and a processor for performing the above-described operation using data stored in a memory. The charging cable is operable to be a vehicle-to-vehicle (V2V) charging cable enabling vehicle-to-vehicle electrical charging and a control method for charging. The charging cable is operable for identifying the source and target batteries in V2V charging systems. The vehicles could communicate with each other to negotiate and determine which one will act as the power source and which will receive the charge. This communication might occur through wireless protocols or using communication technologies embedded in the charging cable. In an embodiment, the charging cable or connectors might send specific signals to the vehicles, allowing them to recognize the roles of source and target. The vehicles would interpret these signals and adjust their systems accordingly. The charging cable or associated adapters, or SECC might contain logic that identifies the source and target batteries based on the connections made and the power flow observed. In an embodiment, the Battery Management System (BMS) of each vehicle may be operable for identifying and managing the charging process. The BMS of each vehicle may communicate with the charging cable or adapters to establish the source and recipient of power. The charging cable 440 is operable for bidirectional energy flow for V2V charging.

Safety Zone estimation module 306: In an embodiment, a model based engineering approach is used for safety zone estimation. Model-based engineering for safety zone estimation involves using mathematical models to predict a vehicle's safety zone given various parameters and conditions.

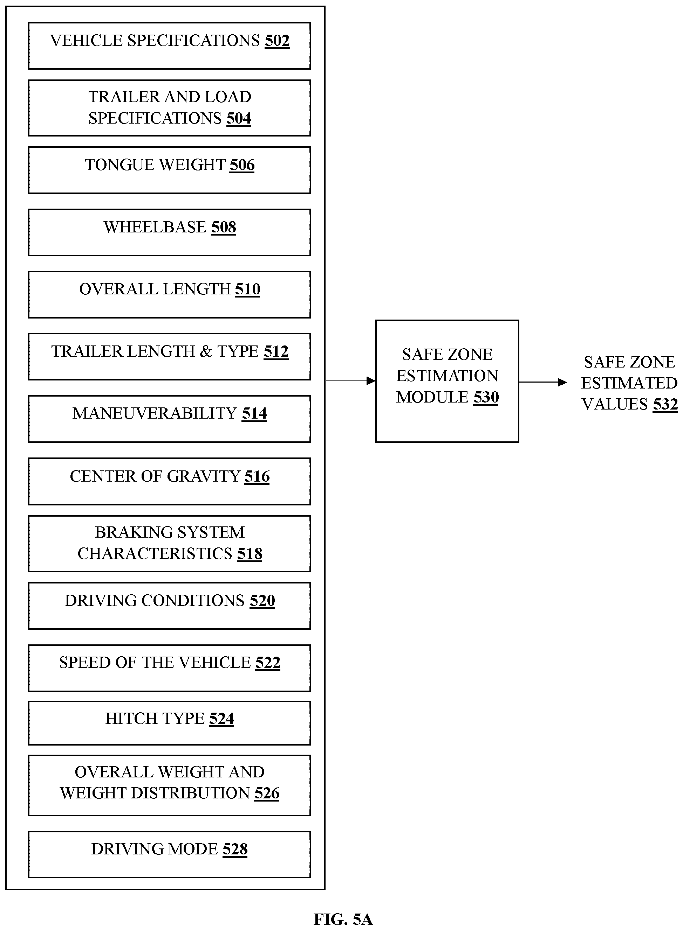

FIG. 5A shows input and output of the Safety Zone Estimation Module according to an embodiment. Safety zone represents the distance or space required between the vehicle combination and other surrounding elements to ensure safe maneuvering, stopping, and overall control of the vehicle combination setup. Safety zone estimation module 530 may take various inputs to feed into a model for safety zone estimation which may typically involve multiple variables including length of the towing vehicle and trailer, weight distribution, road conditions, speed, visibility, traffic density, and various other variables. The safety zone estimation module signifies the minimum safe distance or space required for proper operation, preventing accidents or mishaps. For example, a general equation or model for model-based range estimation may be considered as:
Safety Zone (in distance units, e.g., meters) = f (VEHICLE SPECIFICATIONS 502, TRAILER AND LOAD SPECIFICATIONS 504, TONGUE WEIGHT 506, WHEELBASE 508, OVERALL LENGTH 510, TRAILER LENGTH AND TYPE 512, MANEUVERABILITY 514, CENTER OF GRAVITY 516, BRAKING SYSTEM CHARACTERISTICS 518, DRIVING CONDITIONS 520, SPEED OF VEHICLE 522, HITCH TYPE 524, OVERALL WEIGHT, AND WEIGHT DISTRIBUTION 526, DRIVING MODE 528);
Where: f(...) represents a mathematical function that utilizes various parameters to calculate the safety zone;
VEHICLE SPECIFICATIONS 502 comprises variables such as Gross Vehicle Weight Rating (GVWR), which is the maximum allowable weight that the vehicle can carry, including passengers and cargo; Towing Capacity which is the maximum weight the vehicle can safety tow; payload which is maximum amount of weight that the vehicle can haul, etc. It may comprise all the manufacturers specification parameters.
TRAILER AND LOAD SPECIFICATIONS 504 comprises parameters like trailer weight, trailer type, trailer size/dimensions, trailer make, trailer model, axle configuration, payload capacity, tongue weight capacity, braking system, accessories and features, load type, load weight, load size/dimensions, what kind of load: whether it is another vehicle or cargo, center of gravity of the load, accessories, and features of the load, etc.
TONGUE WEIGHT 506 is the downward force on the hitch.
WHEELBASE 508 comprises the distance between the centers of the front and rear axles of a vehicle combination.
OVERALL LENGTH 510 comprises overall length of the vehicle combination and is determined using parameters that include towing vehicle length, trailer length, hitch length, load extension, allowances for extensions, front and rear overhangs, tongue length, and any other customized adjustments to length.
TRAILER LENGTH AND TYPE 512 comprises trailer type and the length of the trailer from front to rear.
MANEUVERABILITY 514 comprises parameters such as turning radius, wheelbase, steering ratio, vehicle weight distribution, suspension system, tire characteristics, power to weight ratio, Electronic Stability Control (ESC) systems, braking system, transmission system, etc.
CENTER OF GRAVITY 516 of a vehicle combination, comprising a towing vehicle and a towed load, is determined by a combination of factors including weight distribution between the towing vehicle and the towed load, characteristics of the towed load such as mass and height, the height of the tow hitch, configuration and size of the towing vehicle, suspension characteristics, wheelbase of the towing vehicle, tire characteristics, load height, the center of mass of individual components, driving conditions, and driver behavior. These parameters collectively influence the stability and handling of the vehicle combination, with considerations ranging from the distribution of mass to dynamic factors like acceleration, deceleration, and steering inputs. Manufacturers and drivers must carefully account for these parameters to ensure optimal stability and safe handling, particularly when towing.
BRAKING SYSTEM CHARACTERISTICS 518 are determined based on one or more of Brake System Components (e.g., pads, rotors, calipers), Brake Type (e.g., disc brakes, drum brakes), Brake Fluid Quality, Brake Booster Presence and Functionality, Tire Condition and Type, ABS (Anti-lock Braking System), Vehicle Weight, Suspension System, Road Conditions, Driving Speed, Driver Input, Brake Fade, Regenerative Braking (for Electric Vehicles), Weather Conditions, Brake Pad Material, etc.
DRIVING CONDITIONS 520 comprises one or more of state of the road surface (dry, wet, snowy, or icy), Visibility (fog, rain, or darkness), Traffic density, external elements (construction zones, potholes, and variations in terrain), temperature, wind conditions, etc.
SPEED OF VEHICLE 522 comprises parameters that account for actual speed of the vehicle as well as speed characteristics of the vehicle which comprise one or more of speed of the vehicle, vehicle aerodynamics, shape, size, weight, tire pressure, road conditions, terrain, etc.
HITCH_TYPE 524 comprises the type of hitch used for connecting the trailer. Common hitch types include "ball hitch", "fifth-wheel hitch", "pintle hitch", etc. It comprises variables to define all classes of hitches like class 1 to class 5 commercial duty hitches.
OVERALL WEIGHT AND WEIGHT DISTRIBUTION 526 comprises parameters to define how the load is distributed in the vehicle combination during towing or cargo transportation. It includes one or more of trailer characteristics, cargo characteristics, loading distribution, weight on the axles, tongue weight, towing capacity, etc.
DRIVING_MODE 528 comprises selected driving modes, which may include options such as "eco mode," "sport mode", "normal mode", etc. Different driving modes demand different performance characteristics, such as throttle response, engine output, and transmission settings of the vehicle.

The safety zone estimation module 530 may determine the overall parameters from the vehicle and the item that is attached, and then determine the safety zone and provide safety zone estimated values 532. The safety zone may be specified in feet or meters around the vehicle as a circular region or it can vary on each side of the vehicle, or, for example, the front safety zone may be different from the back safety zone, left side may be different to front and right side, etc., depending on the vehicle or vehicle combination actions and surroundings. According to an embodiment of the system, the safety zone comprises one or more of a stopping distance, a trailing distance, a turn radius, a maximum permissible height, a maximum permissible weight, and a lane change distance. According to an embodiment of the system, the system considers the overall length and the overall weight of the vehicle combination to determine a stopping distance. According to an embodiment of the system, the system considers the overall length for determining a safe distance for changing a lane. According to an embodiment of the system, the system considers the overall length for determining a safe trailing distance. According to an embodiment of the system, the system, upon receiving a signal and data from the item that is attached, alerts a driver about possible contact zones on a route, due to one or more of the overall length, overall height, and overall width. According to an embodiment of the system, the system provides a warning by highlighting a turn that would be difficult or not possible to make. According to an embodiment of the system, the system considers the overall length, the overall weight, and an attachment mode for determining a turning radius.

The safety zone around a vehicle combination comprises maintaining an adequate following distance, lane change distance, side clearances, height clearance, turn radius, etc. In an embodiment, the vehicle system determines that a trailer is attached and determines values for the safety zone in various modules associated with the vehicle (e.g., Adaptive Cruise Control, Collision Avoidance System, Emergency Maneuvering System, Advanced Driver Assistance Systems (ADAS) etc.) and overrides them with distances that are suitable for vehicle combination. Once the trailer is removed, then the distances are preset to the default version. Following distance, commonly guided by the "three-second rule," allows for a gradual stop in response to sudden changes in the leading vehicle combination's speed. Following distance is changed based on overall length of the vehicle combination, which is the length of the vehicle added to the length of the trailing system. It may further be adjusted/adapted based on factors such as speed and weather conditions to provide ample reaction time. For lane change distance, the safe zone is determined based on the overall length and optionally overall weight of the vehicle combination. It may further be adapted based on overall traffic flow in the lane that the vehicle needs to enter to ensure that there is enough space for the vehicle combination to merge into the lane. Appropriate side clearance is determined based on overall width of the vehicle combination for avoiding collision with adjacent vehicles and obstacles. Appropriate height clearance is determined taking into consideration overall height of the vehicle combination. A turn radius will also be changed based on the overall length and the connection type between the vehicle and the trailer. An overall buffer zone, a space maintained in all directions, may be added to the determined safe zone to add flexibility in responding to unexpected situations. Emergency stopping distance is determined based on overall length and weight. It is further adapted based on speed of the vehicle combination, road conditions, and reaction time of the vehicle and the driver. In an embodiment, the vehicle system adapts the vehicle parameters when safety zone violations are detected. For example, when the following distance is not maintained as determined by the vehicle combination overall length and weight, then the system would warn and automatically reduce the speed of the vehicle to maintain the appropriate following distance when the driver fails to react to the warning.

The actual form of the equation and the specific variables used may depend on the complexity of the model and the level of detail required for accurate safety zone estimation.

According to an embodiment, developing a model for safety zone estimation comprises data collection, pre-processing, analysis, model building, and validation against real-world data. The data may then be regressed and presented as a form of regression equation with all the parameters (input variables) of interest. Once the model is prepared, it is validated and trained, it may further be evaluated in real world situations. Upon desired performance in accuracy and precision, the model may be deployed on the vehicle systems.

In an embodiment, the model may be deployed on the system. In another embodiment, the model may be deployed on a cloud. In an embodiment, the model may be based on data collected over various scenarios and different vehicles. In another embodiment, the model may include physics-based equations.

In an embodiment, the system monitors for a change in configuration and then determines a safety zone. When the configuration of the vehicle impacts the safety zone, then the new safety zone will be determined. In an embodiment, the safety zone equation may be a composite equation formed from individual models providing safety zone estimation for a single or group of variables/factors. In an embodiment, the parameters or factors may be weighted based on the contribution and importance to the safety zone. The weights may be provided to various items such as trailers, passengers, other loads, driving conditions, weight distribution, etc., while determining the safety zone.

According to an embodiment, the estimation module is smart and adaptive and thus an adaptive smart safety zone estimation module. According to an embodiment of the system, the adaptive smart safety zone estimation is operable to consider one or more of driving conditions, terrain, weather, driving habits, historical data, real-time inputs, and a current state of the vehicle system. According to an embodiment of the system, the adaptive smart safety zone estimation is operable to modify the safety zone according to one or more of sensor data from the vehicle and the trailer / object on the trailer, the driving conditions, the terrain, the weather, the driving habits, the real-time inputs, and the current state of the vehicle system. According to an embodiment of the system, the system is operable to provide a safety zone with an additional/ buffer zone.

Adaptive smart safety zone estimation utilizes vehicle combination sensors to determine situational awareness. The vehicle combination sensors (sensors of vehicle, attachment, and the load carried by the attachment), including cameras, lidar, radar, and other technologies, continuously gather data about the surrounding environment. This sensory input is processed for object recognition and classification, distinguishing between vehicles, pedestrians, and potential obstacles. Accurate mapping and precise localization contribute to understanding the vehicle's position within the environment. Real-time updates with the system dynamically adjust to changes in traffic conditions, road closures, or unexpected obstacles. The vehicle's safety zone estimation module utilizes the perceived environment to generate adaptive safety zone, considering factors such as traffic dynamics, road geometry, and the locations of other road users. Risk assessment allows the vehicle combination to make decisions that prioritize safety, and communication systems enable interaction with infrastructure and other vehicles for enhanced situational awareness. Driver monitoring ensures human readiness, reaction time, behavior, particularly in semi-autonomous scenarios and manual mode scenarios.

External resource identification and utilization module 307 identifies resources associated with the trailer and the load carried by the trailer. The system comprises necessary software and hardware to enable identification and utilization of such identified resources. For example, the vehicle may be a towing vehicle and the resources might be available on the towed vehicle. Such resources could be sensors associated with the towed vehicle, battery associated with the towed vehicle, and any other resources including first aid kits, spare tire kit, a jack, etc. To enable a towing vehicle to detect sensors, battery status, and other relevant information from a towed vehicle and its dolly or trailer, a system involving various sensors, communication protocols, and power connections including power management module is established on both the towed vehicle and the towing vehicle.

The components of the system on the towing vehicle comprises communication interface, sensor integration and power management module. The components of the system on the towed vehicle comprises a communication system, sensor network and power supply recognition from the towed vehicle.

Towed vehicle system establishes a sensor network from the sensor array associated with the towed vehicle comprising battery sensors, brake sensors, light sensors, GPD module, communication module, etc. Each sensor is equipped with unique identifiers for data retrieval by the towing vehicle. These sensors may be connected to a microcontroller or central processing unit within the towed vehicle. The communication system of the towed vehicle is capable of broadcasting its sensor data to the towing vehicle. Communication system facilitates communication between the towed vehicle and the towing vehicle for various scenarios including identification and utilization of resources available with the vehicle combination. Communication protocols for real-time communication between the towing vehicle and the towed vehicle may be CAN (Controller Area Network), Bluetooth^{®} or Wi-Fi^{®}, RFID (Radio-Frequency Identification). Communication parameters may be operable to ensure secure data exchange. Security measures ensure that only authorized towing vehicles can access this data. A handshake or identification process between the towing and towed vehicles may be established by the system. A power connection between the towing vehicle and the towed vehicle may be established using a dedicated power line with appropriate connectors, ensuring compatibility and safety standards to power the sensors and communication modules. This line may be equipped with proper fuses and connectors to ensure safety. A secure and weatherproof electrical connector on the towing vehicle to connect to the towed vehicle electrical connection point, and a secure data port on both vehicles for communication forms data connection points. Towing vehicle may be equipped with a matching communication module and power supply for the towed vehicle. The towed vehicle's electrical system is operable to recognize and respond to requests from the towing vehicle's power management module. Power management module is operable to recognize the power supply line from the towed vehicle. Power management module implements safety features to prevent overloading and monitors the health of the towed vehicle's battery. Further an interface or dashboard in the towing vehicle to display information received from the towed vehicle may be installed. Prior to deploying the system, testing of the entire system, including sensor functionality, communication reliability, and power connections may be conducted. Sensors and communication modules are calibrated to ensure accurate data transmission. Further the system may be equipped with indicators and alarms in the towing vehicle to alert the driver of any issues with the towed vehicle.

Battery status sensor in the towed vehicle may be connected to the vehicle's battery terminals operable for monitoring voltage levels, charging status, and overall battery health. A dedicated power supply line from the towing vehicle may be connecting the towed vehicle's battery through a relay or switch to control power flow. An isolation mechanism is implemented to disconnect the towed vehicle's battery from its electrical system when not in use to prevent unnecessary draining.

In an embodiment, a towing vehicle utilizes the towed vehicle resources. When towing, activate the relay or switch to allow the towing vehicle to draw power from the towed vehicle's battery. Further, the system ensures that the power transfer is controlled to prevent overloading the towed vehicle's battery. When towing, the relay or switch is activated to allow the towing vehicle to draw power from the towed vehicle's battery. In an embodiment, a towed vehicle utilizes the towing vehicle resources. In an embodiment, a charging system in the towed vehicle is established to replenish its battery during towing. The charging system may be connected to the towing vehicle's electrical system to draw power.

The charging system as shown in FIG. 4G and FIG. 4H between the towing vehicle and the towed vehicle using a charging cable is activated when the towing vehicle is in motion. The battery status of the towed vehicle and the towing vehicle is monitored in real-time. The charging rate of the towing vehicle is adjusted accordingly to avoid overcharging. The communication protocol is operable to transmit battery status data from the towed vehicle to the towing vehicle for communication of battery data in real-time. Battery data is displayed on the towing vehicle's interface to keep the driver informed. A manual override or automatic switch is implemented to divert or terminate the power flow if the towing vehicle and/or towed vehicle experience any electrical issues. Safety features are incorporated to prevent complete battery depletion in the towed vehicle, ensuring there is enough charge left to start the towed vehicle when needed. Audible and visual alerts in the towing vehicle provide the towed vehicle's battery status when it falls below a certain threshold.

In an embodiment, the towing vehicle implements data analysis of the data received from the towed vehicle's sensors. In an embodiment, the towing vehicle may refer to both the towing vehicle and the equipment used for towing such as trailer or dolly. The system further implements AI based algorithms that can interpret sensor data and provide situational awareness, warnings, or alerts in the towing vehicle in case of abnormalities. The system further utilizes real-time battery status data to optimize power consumption in the towing vehicle. In an embodiment, the system allows the towing vehicle to draw power directly from the towed vehicle's battery. On the towed vehicle side, the system is operable to regularly transmit sensor data to the towing vehicle, providing real-time updates on status of various sensors such as lighting sensors, proximity sensors, safety indicators, etc. Further, the system facilitates bidirectional communication to receive any commands or alerts from the towing vehicle regarding safety measures. The system allows the towing vehicle to draw power from the towed vehicle's battery during towing as per the requirement. Smart charging algorithms are implemented to optimize the charging process based on the towed vehicle's battery chemistry and condition. Before establishing the connection between the towed vehicle and the towing vehicle, compatibility is ensured with various battery types (lead-acid, lithium-ion). In an embodiment, the available battery charge from the towed vehicle to the towing vehicle is considered in range estimation of the vehicle combination. Range may be determined by considering several factors such as driving conditions, terrain, weather, and driving habits along with attachments. The system may employ sensors and advanced Artificial Intelligence / Machine Learning algorithms (AI/ML), and data processing to make informed estimations. It may utilize real-time data and historical patterns to create a more accurate and personalized range prediction. The smart aspect of the system allows it to learn from past behaviors and optimize its calculations for different drivers and scenarios. The range may be adaptive. The term "adaptive" as used herein refers to the ability to adjust or modify the system in response to varying conditions, circumstances, or input. When adaptive, the range estimation system is capable of adjusting and updating its calculations based on the changing conditions during a drive. For example, the adaptive system can adjust or modify the system to increase the estimated or available range according to current situation, environment, and requirements. As the conditions change, the system continuously recalculates the estimated range to provide a more accurate prediction of how far the vehicle can travel before needing to recharge or refuel. This adaptability ensures that the range estimate remains relevant and reliable even as driving conditions evolve. The available range estimation considers a variety of changing factors, such as driving conditions, terrain, weather, driving habits, and the current state of the vehicle's systems (e.g., battery health in electric vehicles).

For utilizing the battery resource of the towed vehicle by the towing vehicle, the system comprises a battery sensor associated with the towed vehicle to indicate the status of the towed vehicle battery; a power supply line between the towing vehicle and the towed vehicle establishes a connection and connects the power supply line to the towed vehicle's battery through a relay or switch to control power flow; a charging system between the towing vehicle and the towed vehicle such that the charging system draws power from the towed vehicle and replenishes the battery of the towing vehicle during towing.

Memory 308 may be a non-volatile memory (NVM) which is crucial for the reliable operation of the system, ensuring that essential data is preserved even during power interruptions or failures. Various NVM technologies are utilized, such as flash memory for storing the operating system and software, EEPROM for retaining configuration data, calibration values, and sensor settings, Ferroelectric RAM (FRAM) for critical real-time information, and emerging technologies like ReRAM for potential performance enhancements due to its high-speed operation and low power consumption.

In an embodiment, the memory may be a cloud-based memory. In another embodiment, the memory may be a local memory. In another embodiment, it may be a combination of local and cloud-based memory. Local memory refers to the traditional memory components present in a physical device, such as a computer's RAM, hard disk drives (HDDs), or solid-state drives (SSDs). It provides fast access to data and is directly connected to the device, making it suitable for immediate processing tasks and offline use. On the other hand, cloud-based memory relies on remote servers and services provided by third-party cloud providers to store and manage data over the internet. Systems can access their data from anywhere with an internet connection, allowing for seamless collaboration and scalability. Cloud-based memory is often used for storing large amounts of data, enabling data sharing, and providing backup and disaster recovery solutions. The combination of local memory and cloud-based memory allows for flexible and efficient data management tailored to different needs of the system.

Communication module 310, functions are similar to communication module 220 as described herein in this application in relation to FIG. 2. Further it facilitates communication between different modules within the system, communication between the item such as trailer and the vehicle, communication between the vehicle and the load on the trailer, etc.

Communication between the vehicle and the attachment: In order for the system to determine the attachment, a communication connection is formed between the vehicle and the trailer to negotiate or transfer the information. Between the vehicle and the trailer, a new connection that does not exist at the moment will be established and communications will start going back and forth. In an embodiment, the connection could be a physical connection or a wired connection. In another embodiment, the connection is a wireless connection. In an embodiment, the connection is established immediately once a trailer is attached. In another embodiment, the user may be pushing a button or choosing an option on the infotainment system to establish the connection after the trailer is attached. Prior art does not disclose any communication between the trailer and the vehicle.

In an embodiment, the trailer has a wireless communication module that is activated upon connecting it to the vehicle. The communication module is operable to communicate with the vehicle information regarding the trailer, for example, trailer weight, trailer payload, trailer size, etc., which the vehicle will then consider in calculating the overall range considering the trailer attachment. In an embodiment, the system detects the connection of a trailer or an additional item. Further, it also retrieves the information about that particular trailer or the additional item using the communication module. In an embodiment, the communication is via a physical connection, like a wired communication. In an embodiment, it is via wireless communication.

For example, if the vehicle is being connected with a trailer that is really big in size, the routing has to be modified, because maybe there are some places the vehicle cannot go through that may be too narrow. If there is something that is attached as a trailer and the trailer height is much higher than the allowed height on a path, then the routing has to change. Initially, without the trailer, the system may suggest a routing. The system would then consider the trailer attachment, and the trailer size and height, and reevaluate if there are any restrictions on the routing based on the dimensions of the vehicle combination. If it finds the routing is unsuitable to the trailer height or size, the system may suggest a new route. In one scenario, the vehicle detects whether the cargo it is transporting falls under the category of Hazardous Materials (HazMat). The system also validates whether both the cargo and the chosen transportation route adhere to regulatory requirements both in size, weight, and content. If a route is found to be unsuitable for transporting HazMat materials, the system then calculates an alternative route that is in compliance with HazMat regulations. According to an embodiment of the system, the communication module is operable to receive communication from the item. According to an embodiment of the system, the communication module is operable for providing two-way communication with the item. According to an embodiment of the system, the communication module supports a communication protocol, wherein the communication protocol comprises one or more of a Hypertext Transfer Protocol (HTTP), Message Queuing Telemetry Transport (MQTT), WebSocket, Constrained Application Protocol (CoAP) and Advanced Message Queuing Protocol (AMQP). According to an embodiment of the system, the connection is a wireless connection. According to an embodiment of the system, the connection is a wired connection.

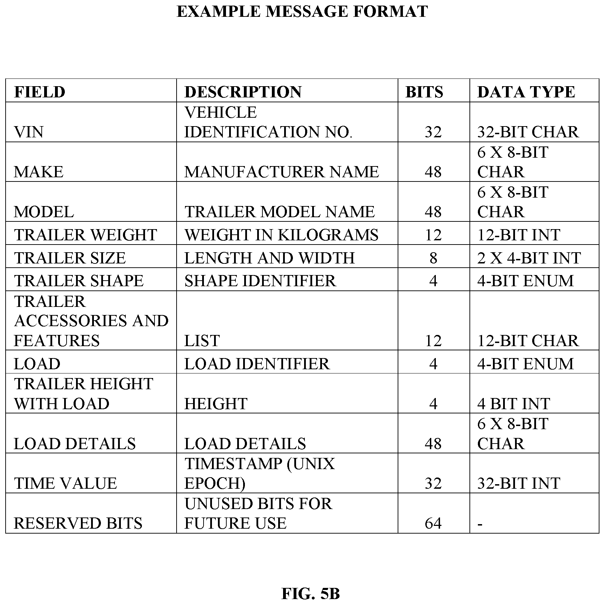

FIG. 5B shows an example communication message format and memory allocation according to an embodiment. To prepare a compact message for conveying trailer details and the load/ cargo details, a binary encoding scheme where each item is allocated a specific number of bits may be used. The number of bits allocated to each item will depend on the range and precision required for that particular attribute. FIG. 5B shows an example field and allocation of bits according to an embodiment. In this example, each field in the message has a specific number of bits allocated to it:

Vehicle Identification Number (VIN) field uses 32 bits (32 characters, each represented by an 8-bit ASCII code) to represent the Vehicle Identification Number, a unique identifier for the trailer. Make uses 48 bits (6 characters, each represented by an 8-bit ASCII code) to specify the manufacturer's name. Model uses 48 bits (6 characters, each represented by an 8-bit ASCII code) to specify the trailer's model name.

Trailer Size field uses 8 bits (4 bits for length and 4 bits for width) to represent the trailer's size in meters or feet. The Trailer Shape field uses 4 bits to represent a shape identifier, where different shape codes can be assigned to various trailer shapes (e.g., rectangular, rounded, etc.). The Trailer Weight field uses 12 bits to represent the trailer's weight in kilograms, accommodating a range of weight values.

Trailer Accessories and Features uses 12 bits (character) and may comprise accessories and additional features coded as a string with identifiers for sensors and locations, accessories present, etc.

Load Details field uses 48 bits (6 characters, each represented by an 8-bit ASCII code) to represent the Load Size in meters or feet, Load Shape field which may uses 8 bits to represent a shape identifier, where different shape codes can be assigned to various trailer shapes (e.g., rectangular, rounded, etc.). The load category field uses 8 bits to represent whether the load is another vehicle or the category using a code assigned to various categories. Load details may further comprise accessories and additional features coded as a string with identifiers for sensors and locations, accessories present, etc.

The Time Value field uses 32 bits to represent the timestamp using Unix Epoch format, indicating when the message was generated. The Reserved Bits are bits set aside for potential future use or additional attributes that may be added to the message format later.

Message fields and allocation of bits are for example and a hypothetical representation for demonstration. In implementations, the fields, actual message format, and the number of bits allocated to each item may vary based on the specific requirements and constraints of the application and communication protocol used.

Various communication protocols can be employed for transmitting trailer details based on specific application requirements and range considerations. Bluetooth^{®} and Wi-Fi' are suitable for short-range communication within close proximity, while cellular communication utilizing 3G, 4G, or 5G networks allows for data transfer over longer distances. RFID is valuable for contactless identification or tracking purposes, and CAN may be used for in-vehicle communication between the trailer and the vehicle. V2X protocols encompass V2V and V2I communication, enabling vehicles to share data with each other and infrastructure units. DSRC, designed for V2V and V2I scenarios, facilitates short-range communication of trailer details. The selection of the communication protocol depends on factors such as range, data transfer rate, power consumption, security, and existing infrastructure, as well as the specific use case for trailer details communication.

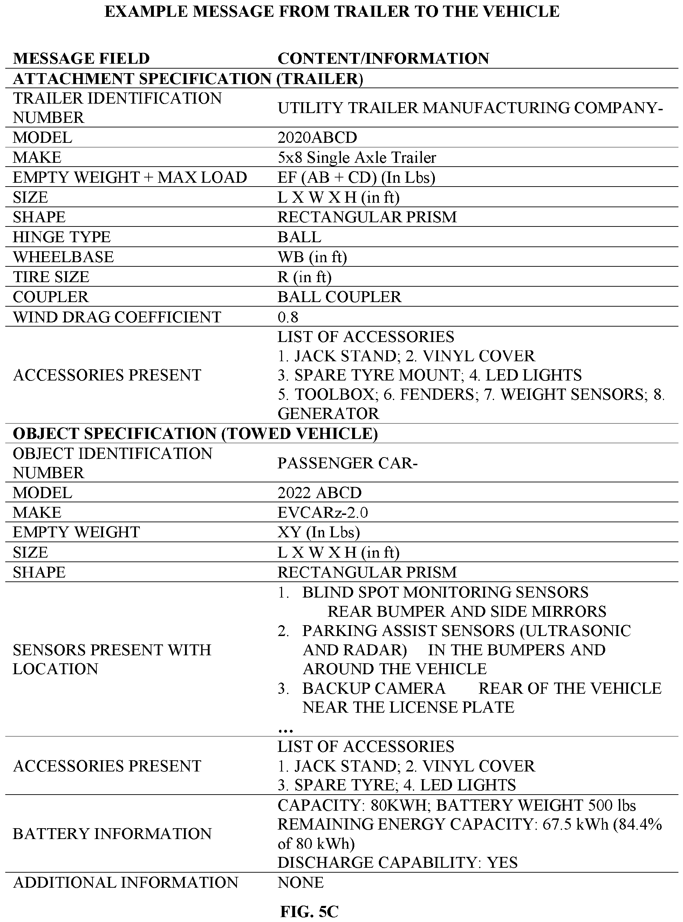

FIG. 5C shows an example message exchange between trailer and the vehicle according to an embodiment. It may comprise elements that relate to the trailer and its specifications and the load or object the trailer is carrying and the object's specifications. In an embodiment, the object and its specifications may be gathered by the trailer from the object and appended to the message. In another embodiment, the vehicle may get trailer specifications from the trailer and the object specifications from the object that the trailer is carrying. Trailer specifications may comprise trailer identification number, trailer model, trailer make, and trailer details comprising an empty weight, max load carriable, a size, a shape, a hinge type or coupling mode, wheelbase, tire size, a coupler type, a wind drag coefficient and a list of additional accessories. In an embodiment, the message can be tailored to basic information of the trailer comprising a size, shape, and weight of the trailer. In an embodiment, the message can be sent to the vehicle upon attachment. In an embodiment, the message may be sent to an App when the trailer is booked or scheduled. In an embodiment, the message may be in the RFID tag and can be read when a reader scans the RFID tag. Object specifications may comprise object identification number, object category, object model, object make, and object details comprising object weight, object size, object shape, features like sensors that are present and their location, a list of additional accessories and features, and battery information. In an embodiment, the message can be tailored to basic information relating to the object comprising a size, shape, and weight. In an embodiment, the message can be sent to the trailer upon loading the object on the trailer. In an embodiment, the message may be sent to an App when the object is loaded on the trailer. In an embodiment, the message may be in the RFID tag and can be read when a reader scans the RFID tag.

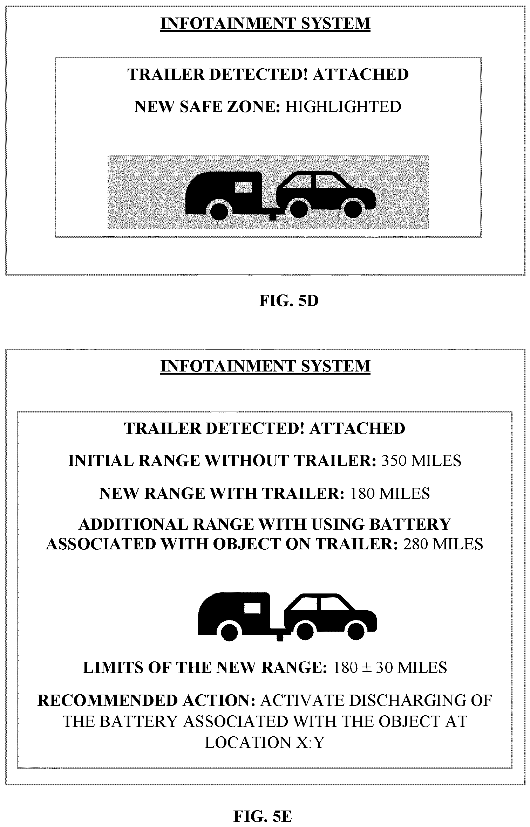

Once the data from the trailer is received or the trailer is detected, the system may consider this new configuration of the vehicle and estimate the safe zone. FIG. 5D shows a Safe Zone with attachment displayed on the infotainment system of the vehicle according to an embodiment. In an embodiment, the estimated safety zone of the vehicle combination is displayed on the infotainment system. In an embodiment, an upper and lower limit of the safety zone are estimated and displayed. The upper and lower limit may be obtained by considering the variations in the real-time conditions and adaptive adjustments. According to an embodiment, current driving data, sensor data, traffic data, road conditions, weather condition, driving speed, load distribution, etc., are considered to adaptively change the safety zone.

FIG. 5E shows an example message displayed on the infotainment system of the vehicle according to an embodiment. The message may comprise range data with and without the trailer. Further if a charging cable is available either with the vehicle or on the trailer/ with the object then the vehicle can estimate the range based on the charge it can get from the loaded vehicle/ towed vehicle. Additionally, it may also provide a message when (location or time) to activate/connect the charging cable.

User data and vehicle data collection module 312: User data may be collected from any of the vehicles that the user drives via various user devices. Prior permission may be taken to access such data or portions of data. In an embodiment, the vehicle system may be synchronized with the other devices of the user to access the data. User data may include driving habits, driver profiles, driver reaction time, user preferences and settings, etc. According to an embodiment, the system collects vehicle data. Understanding driver behavior and driving conditions ensures safety, optimizing vehicle performance, and improving overall driving experiences. To gain insights into these aspects, several types of vehicle data can be collected and analyzed. Driving patterns of the vehicle are analyzed in determining maneuverability, stability, etc. Data on distance traveled, routes taken, whether the vehicle was used for towing any other vehicle, vehicle combination behavior while towing, vehicle combination maneuverability and stability while towing, load at various points including axles, tongue weight on vehicle combination, etc., and their impact on energy consumption and safety. Identifying driver behavior, reaction time, and maneuverability allows for determining a safety zone. The data on driving behavior includes acceleration, braking, reaction time, and steering behaviors, providing valuable information about the driver's style and aggressiveness. Driving behavior such as aggressive driving, rapid acceleration, and excessive braking can all lead to providing an increased safety zone or margins on top of the safety zone. Further, topography and terrain data also determine safety zones. Driving uphill or on hilly terrains generally requires more safety margins due to vehicle handling requirements.

Additionally, sensors associated with the vehicle can collect data on weather conditions, road surfaces, and visibility, shedding light on how external factors influence driver behavior, range, and safety. Sensors associated with the trailer and the object may further provide data on the traffic conditions and may provide information for adaptively changing the safety zone using the sensor data. According to an embodiment, the road surface condition is determined by receiving a real-time weather broadcast. According to an embodiment, the road surface condition is determined by a map showing the weather conditions. According to an embodiment, the road surface condition is determined by detecting a road condition in real-time via the computer vision module. According to an embodiment, the road surface condition is determined by analyzing a scattering of an emitted beam of light on a road surface using a filtering technique on an image that is captured by the computer vision module. According to an embodiment, the road surface condition is detected by using vehicle dynamics sensor data and an image obtained of surroundings ahead of the host vehicle by a camera, wherein the camera is a monochrome camera. According to an embodiment, a surface condition observer classifies a road condition based on an evaluation of the image from the camera and comparing it with the vehicle dynamics sensor data. According to an embodiment, the surface condition observer further considers a local weather data and derives the road surface condition, wherein the local weather data comprises a temperature, a humidity value, a rainfall, a sleet fall, a snowfall, a wiper activity, and a cloud data. According to an embodiment, the road surface condition is detected by identifying a road sign using the computer vision module. According to an embodiment, the road surface condition is detected by Vehicle-to-Infrastructure (V2I) communication. According to an embodiment, the road surface condition is determined by a frictional coefficient between a road on which the host vehicle is traveling and a tire of the host vehicle via an accelerometer sensor. According to an embodiment, the road surface condition is determined by a road condition sensor, wherein the road condition sensor is at least one of a temperature sensor, an infrared sensor, an accelerometer, a GPS sensor, and a humidity sensor. Road surface condition refers to the physical state of the roadway, including its smoothness, texture, and friction. It can be affected by several factors such as weather, traffic volume, and maintenance practices. In an embodiment, it may be classified as dry, wet, snow-covered, or icy. Some of the other factors that influence safety include tire wear and tear, tire pressure, attachments present, vehicle configuration as purchased and as updated, vehicle model, make, type, year of manufacture, its current conditions, attachments that are present currently or will be attached in the future, etc.

Speed and location data combined with GPS information offer a view of the vehicle's movements and speed profile, helping to understand driving conditions. Further vehicle performance data, such as engine performance and fuel efficiency, maneuverability while carrying various types of trailers and load on trailers, etc., allows for an evaluation of how the driver's behavior affects the vehicle's health, range, stability, maneuverability, and overall performance. In some embodiments, driver biometric data like eye movements and heart rate may be collected to assess attentiveness and emotional state during different driving conditions. In an embodiment, diverse sets of vehicle data can offer valuable insights into driver behavior, the impact of external factors on driving conditions, and areas for improvement to enhance vehicle safety zones. Privacy and security measures are provided on the data using a cyber security module. By collecting and analyzing these diverse sets of vehicle data and user data, the system may gain a comprehensive understanding of how driver behavior and driving conditions impact the safety of a vehicle and thus provide data for determining a better safety margin.

In an embodiment, a geometric profile of the trailer along with the complete profile of the radar/camera sensor scans are stored in a cloud database or to a local database. In an embodiment, the system determines if scanned trailer profiles are matched with any of the trailer profiles stored. In another embodiment, the system matches the trailer identification number it receives via a communication module or a camera, to download the trailer profile details along with weight, and dimensions, etc. If no match is found, then the system utilizes various physics-based models, or regression-based models to estimate the new safety zone and store the same under new profile identifier. The system may leverage the machine learning and map 3D model of scans with camera overlay for profile matching from the cloud or local database. The system may then determine if the geometric profile match with the cloud/local database is within a certain confidence level, for example a 90-95% match in terms of shape, size, and weight, for example. The system then proceeds to utilize preset inputs for existing intelligent algorithms to determine safety zones. In an embodiment it uses various models to determine a safety zone for the trailer profile and weight. In an embodiment, data of the trip, trailer, trailer features, range, route, weather conditions, driving details such as driving mode are all stored to the database by the system. Trip refers to a journey, often involving travel from one place to another. It involves moving from a starting location or point of origin to a destination. In an embodiment, driving mode may be determined via a sensor dedicated to the setting of the driving mode. In an embodiment, determining a vehicle's driving mode relies on monitoring various factors and sensor data of the vehicle. These include the vehicle's speed, throttle position, brake pedal status, steering angle, and wheel speed, which help ascertain the driver's actions and intentions, facilitating adjustments to engine output and transmission settings. Additionally, engine Revolutions Per Minute (RPM) and transmission gear provide insights into whether the vehicle is accelerating, cruising, or encountering challenging terrain. Environmental sensors and external sensors, like cameras and radar, aid in determining safety. Driver inputs, GPS data, and navigation systems offer valuable context, while terrain and road surface conditions prompt adaptive responses. The vehicle's electronic control unit (ECU) processes all this data to determine the driving mode.

Analysis and Recommendation module 314: By collecting and analyzing diverse sets of vehicle data and user data via the user data and vehicle data collection module 312, strategies are developed using the analysis and recommendation module 314 for predicting the safety zone and increasing the safety of the vehicle combination. Leveraging machine learning algorithms, Artificial Intelligence (AI) may predict the potential safety zone of a vehicle under basic configuration changes like change in length and weight to different driving conditions and scenarios. By considering factors like terrain, weather, traffic, and user behavior, vehicle behavior, AI can estimate the vehicle's safety zone with a higher degree of accuracy. Safety zone estimation using predictive analytics relies on advanced machine learning algorithms to analyze a wealth of vehicle data, vehicle combination data, user data, and various driving conditions.

The process begins with data collection and preprocessing, where historical vehicle data on vehicle combinations, energy consumption, speed, acceleration, stability, maneuverability, and driving behavior is combined with real-time information on weather conditions, traffic, and terrain. Relevant features are extracted from this comprehensive data set for predicting safety zones.

An appropriate machine learning algorithm is selected that can provide the safety zone estimation. Example modules include Regression models, time series analysis, and neural networks. The chosen model is then trained on the preprocessed dataset to understand the relationships between different variables and their impact on the vehicle's safety range. These variables may be discussed herein in the safety zone estimation module 306. By learning from historical data, the model can uncover how several factors, such as driving habits, vehicle behavior, and external conditions, influence safety zones.

Predictive analytics, for safety zone estimation, further integrates real-time data. The model continuously incorporates up-to-date information on weather conditions, traffic patterns, and other relevant factors, ensuring that the predictions are adaptive and responsive to dynamic driving conditions. In addition to estimating the vehicle's safety zone, predictive analytics can also optimize the route to maximize safety and maneuverability. By considering traffic patterns, road conditions, and elevation changes, the model can recommend a route for the given destination, which is suitable for the vehicle combination size, weight, and maneuverability.

Predictive analytics can provide uncertainty assessments, offering insights into the confidence level of the safety zone prediction. This helps users understand the reliability of the estimated safety zone under different scenarios and allows them to make more informed decisions. The process also involves user profiling, creating personalized safety estimates based on individual driving behaviors, reaction times, and vehicle handling. This level of personalization ensures that the safety predictions consider the specific driving patterns and usage of each driver.

Predictive analytics models learn continuously. As new data becomes available, the model may update and refine its predictions, maintaining accuracy over time and adapting to changes in the vehicle's performance or driving patterns. By combining historical data, real-time information, and advanced machine learning techniques, safety zone estimation using predictive analytics provides vehicle users with more reliable and dynamic safety zone predictions. This enables drivers to make informed decisions about route planning and driving behavior.

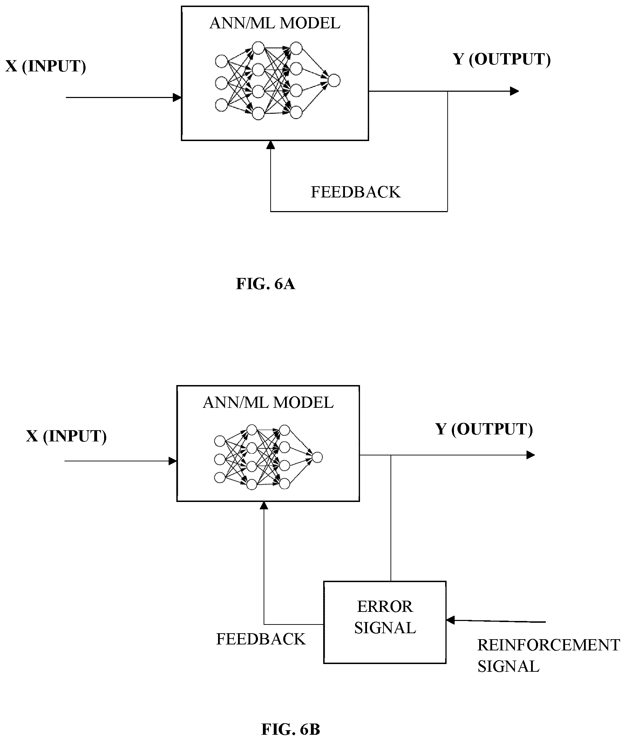

FIG. 6A shows a structure of the neural network / machine learning model with a feedback loop according to an embodiment. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and / or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict a safety zone based on the input data from the user data and vehicle data collection module 312.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes. The neural network is featured with the feedback loop to adjust the system output dynamically as it learns from the new data. In machine backpropagation, propagation and feedback loops are used to train an Artificial Intelligence (AI) model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labeled data and concepts, after a while the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/ML model is trained, a few labeled samples comprising both positive and negative examples of the concepts (e.g., vehicle type, trailer type, driving conditions, driver behavior, vehicle behavior, etc.) are used that are meant for the model to learn. Afterward, the model is tested using unlabeled data. By using, for example, deep learning and neural networks, the model can then make predictions on whether the desired output (for e.g., safety zone) is in the predicted range. However, in the cases where the model returns a low probability score, this input may be sent to a controller (maybe a human moderator) which verifies and, as necessary, corrects the result. The human moderator may be used only in exceptional cases. The feedback loop feeds labeled data, auto-labeled or controller-verified, back to the model dynamically and is used as training data so that the system can improve its predictions in real-time and dynamically. These models may be utilized at various levels, for example, (i) in image processing for detecting a trailer and its parameters given an image (ii) in safety zone prediction given the trailer and load, etc.

FIG. 6B shows a structure of the neural network / machine learning model with reinforcement learning according to an embodiment. The network receives feedback from authorized networked environments. Though the feedback logic is similar to supervised learning, the feedback obtained in this case is evaluative, not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

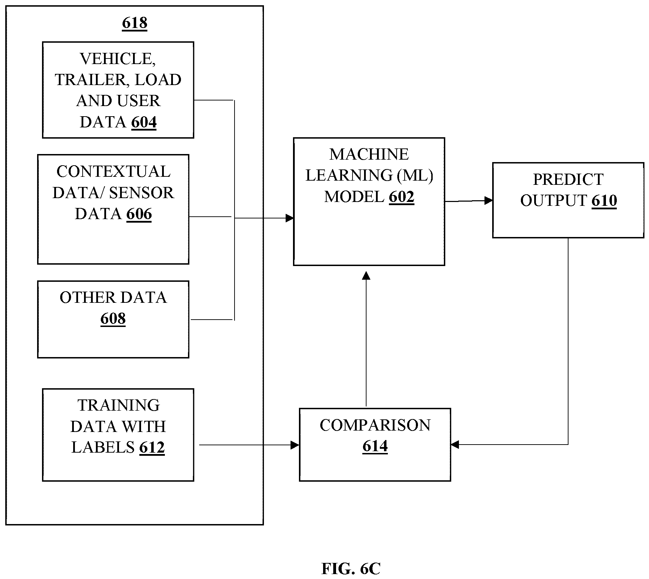

FIG. 6C shows an example block diagram for predicting a safety zone using a machine learning model according to an embodiment. The machine learning model 602 may take as input any data associated with the vehicle, user, attachments, load and learn to identify features within the data that are predictive of safety zone output. The training data sample may include, for example, the vehicle, trailer, load, and user data 604, such as the vehicle size, vehicle shape, vehicle type, vehicle model, weight, length, vehicles accessories, vehicle maneuverability, stability, braking system, etc.; similarly, the training data sample may include trailer size, trailer shape, trailer type, trailer model, trailer weight, trailer length, trailer accessories, load on the trailer, load distribution on the trailer, etc. It further comprises user data such as driving habits, speed profile, braking profile, reaction time, etc. In an embodiment, it relates to systems and methods that identify a trailer, a load on the trailer, trailer and load features in real time using an on-board camera and/or other sensors. This trailer identification, load identification, and feature information, along with the vehicle and user data may be transmitted to the cloud, where the trailer and load identification is coupled with available safety zone estimation in the case of a previously identified vehicle and trailer and load of a similar class and having similar characteristics as well as similar user habits. Some of the data may be historical data from the vehicle in similar situations. Subsequently, the information is used to compute/estimate the safety zone of the vehicle combination using trailer data and the user behavior. The systems and methods of the present disclosure may also provide data analytics information that may be used later to improve vehicle safety zone predictions.

In an embodiment, the training data sample may also include contextual data/information 606 relating to the surrounding environment. This may include, for example, location of the vehicle, current weather conditions, temperature, time of day, traffic conditions in the region, number of lanes, other obstacles, uphill segments of the road, etc. The system may also garner contextual information from a device associated with the vehicle, trailer, or load on the trailer. For example, through an application installed on the device, such as an online mapping service, like Google' maps, and location services, the system may know the vehicle details. Real-time sensor data may be collected which may include, for example, video, image, audio, infrared, temperature, 3D modeling, and any other suitable types of data that capture the current state around the vehicle. In an embodiment, the real-time sensor data may be processed using one or more machine learning models 602 trained and based on similar types of data to predict a safety zone. The current contextual information 606 includes real time sensor data from one or more of the vehicle, trailer, and the load on the trailer.

Other data 608 may include data derived from user data, vehicle data, trailer data, load data, and sensor data. For example, manufacturers specification on load limits of vehicle and the trailer, load category, whether the load has battery charge left that can be used by the vehicle, sensor data for load distribution and load limits, etc.

Any of the aforementioned types of data (e.g., vehicle, trailer, load, and user data 604, contextual data / information 606, other data 608) may correlate with the safety zone computations, and such correlation may be automatically learned by the machine learning model 602. In an embodiment, during training, the machine learning model 602 may process the training data sample (e.g., target vehicle, trailer, load, and user data 604, contextual data/information 606, other data 608), and based on the current parameters of the machine learning model 602, predict output 610 which may be a safety zone associated with the vehicle combination for the given scenario. The predicted output, which is a safety zone of the vehicle, may depend on the training data with labels 612 associated with the training data sample 618. In an embodiment, during training, the predicted output, and the training data with labels 612 may be compared at 614. For example, comparison 614 may be based on a loss function that measures a difference between the predicted output and the training data with labels 612. Based on the comparison at 614 or the corresponding output of the loss function, a training algorithm may update the parameters of the machine learning model 602, with the objective of minimizing the differences or loss between subsequent predicted output 610 and the corresponding labels 612. By iteratively training in this manner, the machine learning model 602 may "learn" from the different training data samples and become better at predicting output 610, predicting a range that is similar to the ones represented by the training labels at 612. In an embodiment, the machine learning model 602 is trained using data which is specific to a type of trailer/s for which the model is used for detecting safety zone. In an embodiment, the machine learning model 602 is trained using data which is general to the trailer types and is used for predicting a safety zone and thus adapting the safety zone based on real-time data.

Using the training data, a machine learning model 602 may be trained so that it recognizes features of input data that signify or correlate to safety zone. For example, a trained machine learning model 602 may recognize data features that signify the likelihood of an impact in the safety zone of the vehicle. Through training, the machine learning model 602 may learn to identify predictive and non-predictive features and apply the appropriate weights to the features to optimize predictive accuracy of the machine learning model 602. In embodiments where supervised learning is used and each training data sample 618 has a label 612, the training algorithm may iteratively process each training data sample 618 (including target vehicle, trailer, load, and user data 604, contextual data/information 606, other data 608), and generate a predicted output 610 which is a safety zone for the vehicle combination based on the machine learning model 602 current parameters. Based on the comparison 614 results, the training algorithm may adjust the model's 602 parameters/configurations (e.g., weights) accordingly to minimize the differences between the generated predicted output 610 and the corresponding labels 612. Any suitable machine learning model and training algorithm may be used, including, e.g., neural networks, decision trees, clustering algorithms, and any other suitable machine learning techniques. Once trained, the machine learning model 602 may take input data associated with a vehicle, trailer, load, and user and output a safety zone considering the vehicle, trailer, load, and user data.

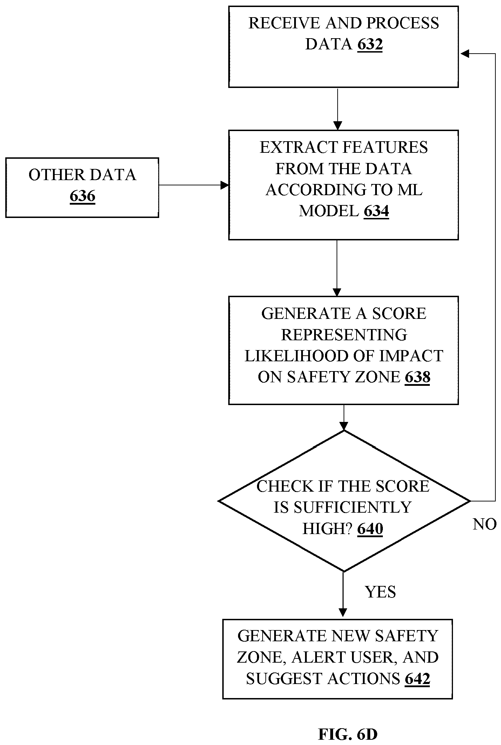

FIG. 6D shows an example flow chart for continuous monitoring, adaptively changing the safety zone, and recommending an action using a machine learning model according to an embodiment. The system may receive real-time data associated with the vehicle, the trailer or items that are being attached, the load, and the user, and process the data as shown at 632. Any type of sensor may be used to gather data pertaining to the vehicle. A sensor output may be, for example, images, videos, audios, LiDAR measures, infrared measures, temperature measures, GPS data, or any other information measured or detected by sensors. In an embodiment, a sensor output may be the result of one or more sensors capturing environmental information associated with the surroundings of the vehicle, which may include traffic at the location, vehicle combination details, number of lanes, traffic around the vehicle combination, road surface condition, etc. The system may receive any data associated with the sensor output from sensors, including raw sensory output and/or any derivative data. In an embodiment, the system may process the received data and identify any actionable parameter of interest using a machine learning model, trained using a set of training data. It may receive other data 636, such as weather conditions, humidity, temperature, driver behavior, tire tread, tire conditions, tire pressure, etc., from other sensors of the vehicle.

As shown at step 634, the system may extract features from the received data according to a machine learning model. The machine learning model is able to automatically do so based on what it learned during the training process. In an embodiment, appropriate weights that were learned during the training process may be applied to the features.

As shown at step 638, the machine learning model, based on the features of the received data, may generate a score representing a likelihood or confidence that the received data about the vehicle combination and how the received data may impact the safety zone. For example, in very heavy traffic conditions, and at low speeds, the safety zone may be tighter than the high speeds and empty traffic conditions. These changes are made adaptively based on the real-time data/ active data from the sensors associated with the vehicle combination.

As shown at step 640, the system may determine whether the score is sufficiently high relative to a threshold or criteria to warrant certain action, such as changing the safety zone. If the score is not sufficiently high, thus indicating a false-positive, the system may return to step 632 and continue to monitor subsequent incoming data. On the other hand, if the score is sufficiently high, then at step 642 the system may generate a new safety zone which is altered from the current safety zone due to the new parameter added (example, bad road conditions, speed conditions, vehicle reaction due to tire pressure changes or weather condition changes), alert the user, and generate or determine an appropriate action/response. In an embodiment, the system may send alerts to appropriate recipients based on the detected event types. For instance, an alert is generated in the vehicle regarding the tighter safety zones, and a message may be sent to the user device or may be displayed graphically on the infotainment system.

In an embodiment, the system may repeat one or more steps of the method of FIG. 6D, where appropriate. In an embodiment, the steps 632 to 642 may be performed by the system, any combination of those steps may be performed by any other computing systems, for example, a remote network or a cloud network. In an embodiment, where machine learning models are used for making such determination, the system may transmit a trained machine learning model to the computing system in the vehicle. This may be desirable since sensor data may be overly large to transmit to the in-vehicle system for training in a timely fashion.

In an embodiment, the system is provided, wherein the driving parameters recognition module utilizes a Convolutional Neural Networks (CNN). In an embodiment, it may use a recurrent neural network architecture because of its ability to use past, temporal information for inference on current inputs. The system may further execute steps to detect whether the user followed and executed the suggested or recommended action and to modify the safety zone accordingly.

Alert signal generation module 316, is an aspect of communication that serves to draw immediate attention to specific events, conditions, or situations that require prompt action or awareness. For example, an alert signal to alert the user when the surrounding traffic enters the safety zone, or when the trailing distance is not enough given the vehicle combination details.

These alert signals are designed to be noticeable, distinctive, and easily recognizable, ensuring they effectively convey the urgency of the situation to the intended recipients. The generation of alert signals takes various forms, depending on the context and the target audience.

In an embodiment, it may be audible alarms. They can range from simple beeps or chimes to attention-grabbing sirens. In an embodiment, it may be a visual alert. Bright and conspicuous visual signals, such as flashing screen, flashing LED displays, flashing text, are employed to draw attention. In addition to auditory and visual alert, haptic feedback may also be present. Haptic feedback provides alert signals through tactile sensations, such as vibrations or pulses. This form of alert may be used in smartphones and wearable devices to notify users of the messages without relying solely on sound or visuals. In an embodiment, it may be a text message, an email, and app notifications are also utilized to generate alert signals on electronic devices. In various contexts, alert signals are used to notify drivers of potential safety zone issues, for example when the driver does not properly maintain the safety zone, or when outside traffic enters the safety zone.

The effectiveness of alert signal generation depends on factors such as the clarity of the signal, the urgency of the situation, and the attention of the intended recipients. Proper design and consideration of the context are taken care of to ensure that alert signals serve their intended purpose and effectively communicate important information to the users. In an embodiment, one or more of audible alarms, visual alerts, haptic feedback, text messages, vehicle alerts are used in keeping users informed about issues related to the safety zone and recommended actions.

Alert signals for safety zone issues in vehicle combination are operable for ensuring that the driver remains informed about the safety zone and vehicle combination limitations. These alert signals are designed to prompt immediate attention, helping drivers make informed decisions to drive the vehicle safely.

One common method of generating an alert signal is through a warning light on the vehicle's dashboard. When the safety zone is violated or the traffic is moving very close or when a lane change is not possible given the vehicle combination parameters and surrounding traffic speeds, a dedicated light illuminates, providing a clear and noticeable visual indicator that the driver needs to act. It prompts the driver of the need to abort the lane change, which is not possible to make, or the vehicle may automatically take an action to abort the lane change action.

In addition to the warning light, displaying the safety zone and the traffic entering or nearing the safety zone of the vehicle combination, the dashboard offers a continuous visual indication of the vehicle's safety zone and the surrounding traffic as icons on the dashboard. As the safety zone is adaptively changed, the driver display is updated accordingly.

Real-time safety zone estimates can be conveyed to the driver through a pop-up alert on the infotainment or navigation screen. As the vehicle's onboard system predicts that the current safety zone limits for the vehicle combination may not be sufficient due to dynamic traffic conditions, weather conditions, or erratic driving by other vehicles, the pop-up alert provides the driver with a timely update of the safety zone. In conjunction with visual alerts, an audible alert tone or chime can accompany the warning light or pop-up alert. The audible signal serves as an effective way to capture the driver's attention, especially in busy or noisy environments where visual alerts might be less noticeable. This multi-sensory approach ensures that the driver is promptly notified of any safety zone concerns, reducing the risk of unexpected accidents during the journey. Furthermore, haptic feedback capabilities in some vehicles allow for additional alert signals. These systems can generate gentle vibrations in the steering wheel or seat to alert drivers about safety zone issues without causing distractions. Haptic feedback is a subtle yet effective way to keep the driver informed without relying solely on visual or audible alerts. By utilizing a combination of visual, audible, and haptic alert signals, the alert signal generation module ensures that drivers receive timely and impactful notifications about safety zone issues.

Display module 318, in the vehicles may be connected to the safety zone alert system through the vehicle's onboard computer or electronic control unit (ECU) according to an embodiment. The safety zone alert system constantly monitors various parameters related to the vehicle combination safety, including sensor data, traffic data, maneuverability of the vehicle combination, stability of the vehicle combination, vehicle reaction time, driver reaction time, weather data, driving patterns, and other factors that influence the safety range.

When the safety zone alert system detects that the safety zone is not maintained or violated, it triggers a warning signal. This warning signal is then sent to the display module, which is responsible for presenting essential information to the driver on the vehicle's dashboard or instrument cluster.

The connection between the safety zone alert system and the display module is typically established through a communication network within the vehicle. Modern vehicles use Controller Area Network (CAN) or other communication protocols to transmit data between different electronic components, including the safety zone alert system and the display module.

Once the warning signal reaches the display module, it activates the appropriate visual and audible alerts to inform the driver about the safety zone issue. In another embodiment, the display module may also generate pop-up alerts on the infotainment or navigation screen, providing more detailed information about the safety issues and potential solutions, such as reducing the speed, aborting lane change, or maintaining proper trailing distance etc. Furthermore, the vehicle may be equipped with haptic feedback capabilities, the display module can trigger haptic alerts, such as gentle vibrations in the steering wheel or seat, to provide an additional tactile cue to the driver. The integration of the safety zone alert system with the display module ensures that drivers receive timely and accurate information about their vehicle combination safety zone. It empowers drivers to make informed decisions, optimize their driving behavior, and plan their routes accordingly to avoid safety zone related issues during their journey.

In an embodiment of the system, the message comprises generating an alert in the vehicle, wherein the alert is at least one of a text message, a visual cue, a sound alert, a tactile cue, and a vibration.

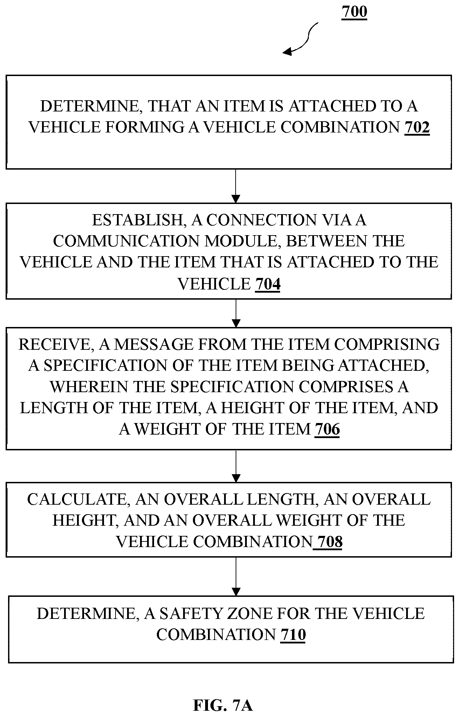

FIG. 7A shows a block diagram for a method for estimating a safety zone based on change in configuration of the vehicle according to an embodiment. According to an embodiment, it is a method 700 comprising, determining, that an item is attached to a vehicle forming a vehicle combination at step 702; establishing, a connection via a communication module, between the vehicle and the item that is attached to the vehicle at step 704; receiving, a message from the item comprising a specification of the item being attached, wherein the specification comprises a length of the item, a height of the item, and a weight of the item at step 706; calculating, an overall length, an overall height, and an overall weight of the vehicle combination at step 708; and determining, a safety zone for the vehicle combination at step 710.

According to an embodiment of the method, the item comprises one or more of a trailer, a boat, a rack, a camper, a caravan, a stock trailer, and a cargo carrier. According to an embodiment of the method, the item carries a load, wherein the load is one of an automobile, an equipment, a golf cart, a livestock, and an animal. According to an embodiment of the method, the message further comprises one or more an identification of the item, a width of the item, a make of the item, a model of the item, an attachment mode of the item.

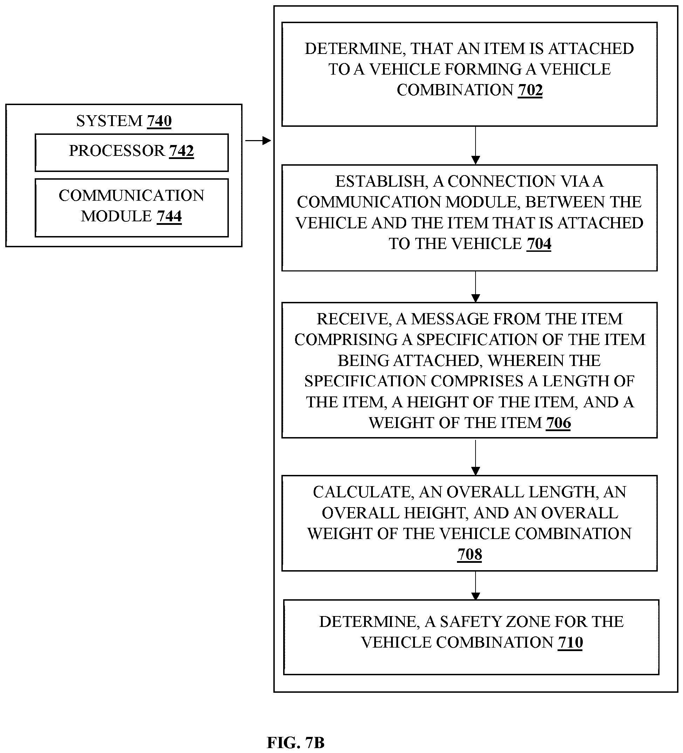

FIG. 7B shows a block diagram for a system for estimating a safety zone based on change in configuration of the vehicle according to an embodiment. According to an embodiment, it is a system 740 comprising, a communication module 744 and a processor 742, wherein the processor is operable to determine, that an item is attached to a vehicle forming a vehicle combination at step 702; establish, a connection via the communication module, between the vehicle and the item at step 704; receive, a message from the item comprising a specification of the item, wherein the specification comprises a length of the item, a height of the item, and a weight of the item at step 706; calculate, an overall length, an overall height, and an overall weight of the vehicle combination at step 708; and determine, a safety zone for the vehicle combination at step 710.

According to an embodiment of the system, the item comprises one or more of a trailer, a boat, a rack, a camper, a caravan, a dolly, a stock trailer, and a cargo carrier. According to an embodiment of the system, the item carries a load, wherein the load comprises one of an automobile, a boat, an equipment, a livestock, an animal, and a golf cart. According to an embodiment of the system, the message further comprises one or more an identification of the item, a width of the item, a make of the item, a model of the item, a payload of the item, and an attachment mode of the item. According to an embodiment of the system, the weight of the item is determined by adding an empty weight of the item and a carrying load on the item.

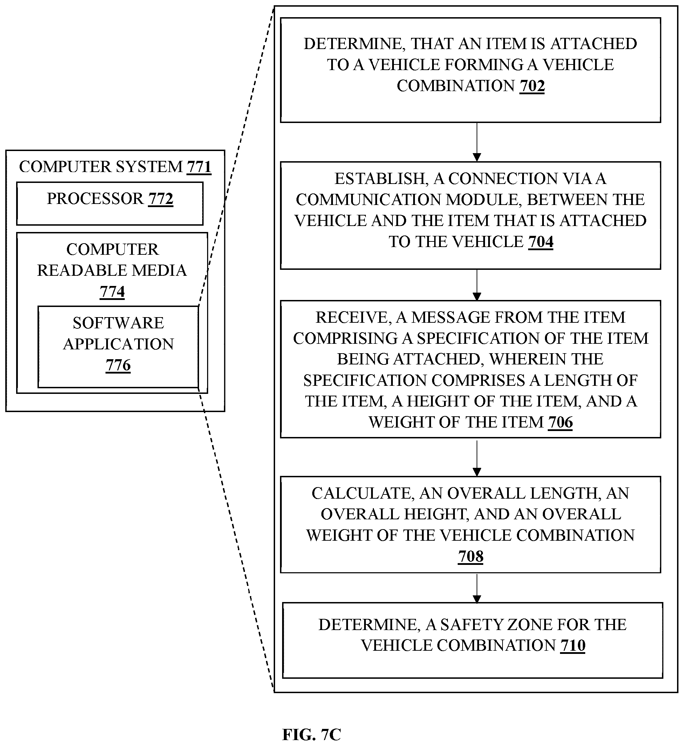

FIG. 7C shows a block diagram for a method stored on a non-transitory computer medium for estimating a safety zone based on change in configuration of the vehicle according to an embodiment. According to an embodiment, it is a non-transitory computer-readable medium having stored thereon instructions executable by a computer system to perform operations comprising determining, that an item is attached to a vehicle forming a vehicle combination at step 702; establishing, a connection via a communication module, between the vehicle and the item that is attached to the vehicle at step 704; receiving, a message from the item comprising a specification of the item being attached, wherein the specification comprises a length of the item, a height of the item, and a weight of the item at step 706; calculating, an overall length, an overall height, and an overall weight of the vehicle combination at step 708; and determining, a safety zone for the vehicle combination at step 710. A software application 776 may be stored on the computer readable medium 774 and executed on a processor 772 of the computer system 771.

According to an embodiment of the non-transitory computer-readable medium, the weight of the item is determined by adding an empty weight of the item and the carrying load on the item. According to an embodiment of the non-transitory computer-readable medium, the safety zone comprises one or more of a stopping distance, a trailing distance, a turn radius, a maximum permissible height, a maximum permissible weight, and a lane change distance. According to an embodiment of the non-transitory computer-readable medium, the item is detected using an RFID technology.

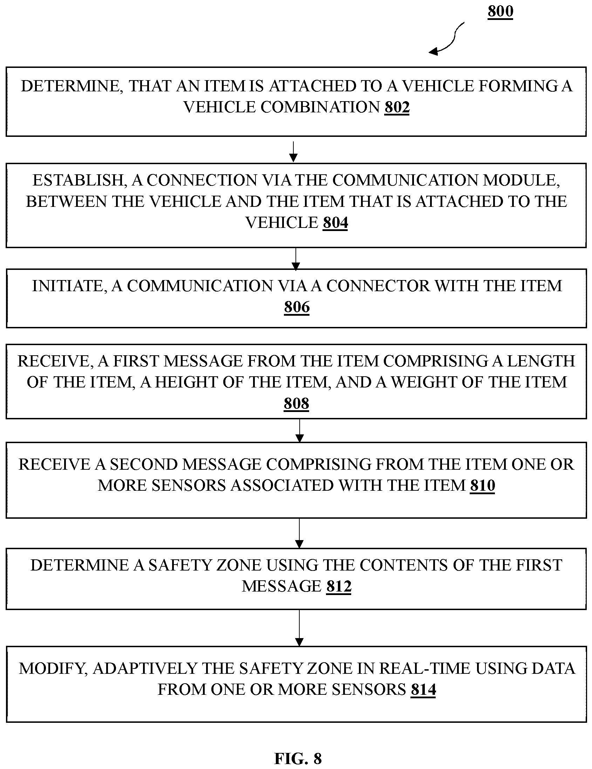

FIG. 8 shows a block diagram for a method for determining a safety zone and then adaptively changing the safety zone from active sensor data according to an embodiment. According to an embodiment, it is a method 800, comprising determining, that an item is attached to a vehicle forming a vehicle combination at step 802; establishing, a connection via the communication module, between the vehicle and the item that is attached to the vehicle at step 804; initiating, a communication via a connector with the item at step 806; receiving, a first message from the item comprising a length of the item, a height of the item, and a weight of the item 808; receiving a second message comprising from the item one or more sensors associated with the item at step 810; determining a safety zone using the contents of the first message at step 812; modifying, adaptively the safety zone in real-time using data from one or more sensors at step 814.

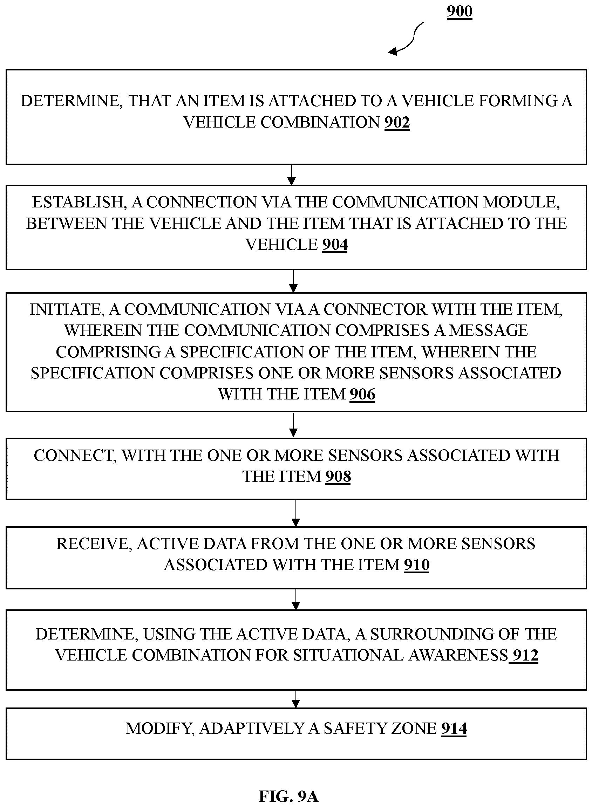

FIG. 9A shows a block diagram for a method for estimating a safety zone based on active sensor data from the vehicle combination according to an embodiment. A method 900 comprising, determining, that an item is attached to a vehicle forming a vehicle combination at step 902; establishing, a connection via a communication module, between the vehicle and the item that is attached to the vehicle at step 904; initiating a communication via a connector with the item, wherein the communication comprises a message comprising a specification of the item, wherein the specification comprises one or more sensors associated with the item at step 906; connecting with the one or more sensors associated with the item at step 908; receiving active data from the one or more sensors associated with the item at step 910; determining, using the active data a surrounding of the vehicle combination for situational awareness at step 912; and modifying adaptively a safety zone at step 914.

According to an embodiment of the method, the method determines an overall length, an overall weight, an overall width, an overall height of the vehicle combination. According to an embodiment of the method, the method considers the overall length, the overall weight, and the one or more sensors associated with the item for determining a stopping distance. According to an embodiment of the method, the method considers the overall length, the overall weight, and the one or more sensors associated with the item for determining a safe distance for changing a lane. According to an embodiment of the method, the method considers the overall length, the overall weight, and the one or more sensors associated with the item for determining a safe trailing distance. According to an embodiment of the method, the method considers the overall length, the overall weight, the one or more sensors associated with the item, and an attachment mode for computing a turning radius. According to an embodiment of the method, the method upon receiving a signal and data from the item that is attached, alerts driver about possible contact zones, due to the overall length of a route.

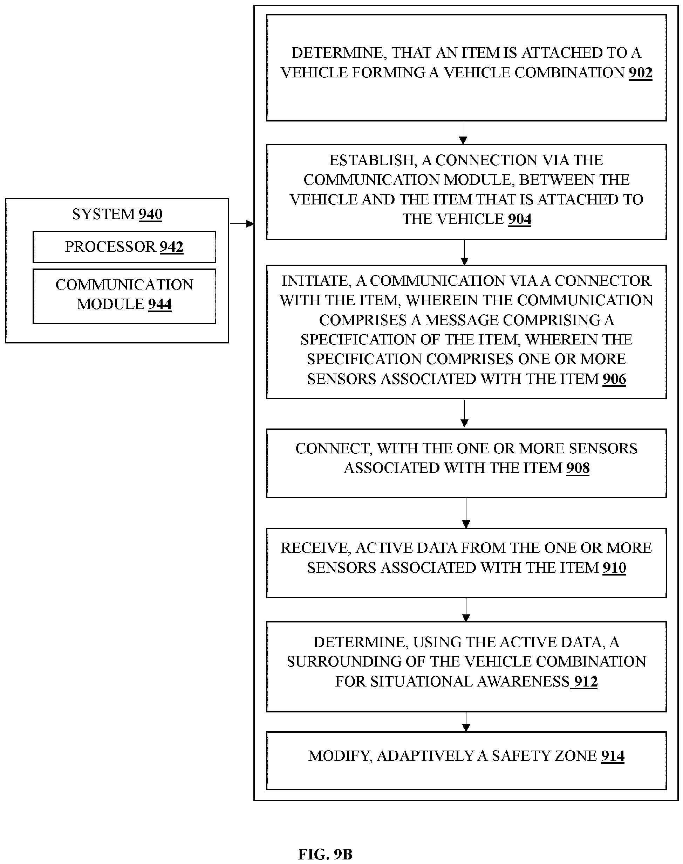

FIG. 9B shows a block diagram for a system for estimating a safety zone based on active sensor data from the vehicle combination according to an embodiment. According to an embodiment, it is a system 940 comprising, a communication module 944; and a processor 942;

wherein the processor is operable to determine, that an item is attached to a vehicle forming a vehicle combination at step 902; establish, a connection via the communication module, between the vehicle and the item that is attached to the vehicle at step 904; initiate, a communication via a connector with the item, wherein the communication comprises a message comprising a specification of the item, wherein the specification comprises one or more sensors associated with the item at step 906; connect, with the one or more sensors associated with the item at step 908; receive, active data from the one or more sensors associated with the item at step 910; determine, using the active data, a surrounding of the vehicle combination for situational awareness at step 912; and modify, adaptively a safety zone at step 914.

According to an embodiment of the system, the item comprises one or more of a trailer, a boat, a rack, a camper, a caravan, a stock trailer, and a cargo carrier. According to an embodiment of the system, the item carries a load, wherein the load is one of an automobile, a boat, an equipment, a livestock, an animal, and a golf cart.

According to an embodiment of the system, the communication module is operable to receive communication from the item. According to an embodiment of the system, the connector is operable for providing two-way communication with the item. According to an embodiment of the system, the connection is a wireless connection. According to an embodiment of the system, the connection is a wired connection. According to an embodiment of the system, the communication is via a wireless signal using a protocol. According to an embodiment of the system, the communication module supports a communication protocol, wherein the communication protocol comprises one or more of a Hypertext Transfer Protocol (HTTP), Message Queuing Telemetry Transport (MQTT), WebSocket, Constrained Application Protocol (CoAP) and Advanced Message Queuing Protocol (AMQP).

According to an embodiment of the system, the message further comprises one or more an identification of the item, a length of an item, a width of the item, a height of an item, a weight of an item, a make of the item, a model of the item, an attachment mode of the item, one or more resources available with the item, an object that is carried by the item as a load, a weight of the object that is carried by the item, a length of the object that is carried by the item, a width of the object that is carried by the item, a height of the object that is carried by the item, one or more sensors associated with the object that is carried by the item, and one or more resources available with the object that is carried by the item. According to an embodiment of the system, an overall weight is determined by adding the weight of the item and the weight of the object to the weight of the vehicle.

According to an embodiment of the system, the safety zone comprises one or more of a stopping distance, a trailing distance, a turn radius, a maximum permissible height, a maximum permissible weight, and a lane change distance. According to an embodiment of the system, the system is operable for monitoring surroundings using the one or more sensors associated with the item to provide an enhanced contact zone. According to an embodiment of the system, the system uses the enhanced contact zone to provide warnings to the operator when attempting a change in lane. According to an embodiment of the system, the system uses the enhanced contact zone to provide warnings to the operator when the vehicle is about to come into contact with another object.

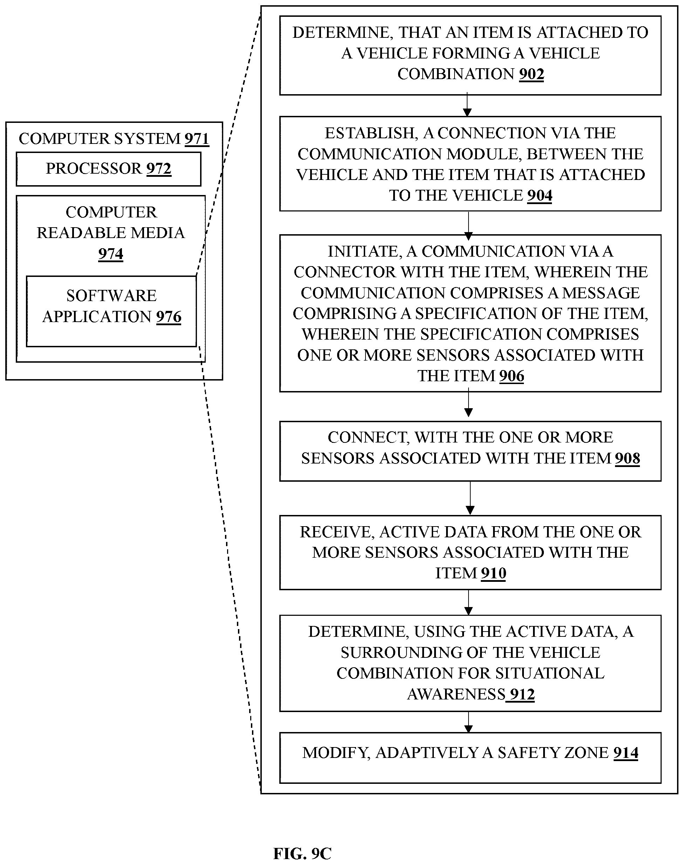

FIG. 9C shows a block diagram for a method stored on a non-transitory computer medium for estimating a safety zone based on active sensor data from the vehicle combination according to an embodiment. According to an embodiment, it is a non-transitory computer-readable medium having stored thereon instructions executable by a computer system to perform operations comprising determining, that an item is attached to a vehicle forming a vehicle combination at step 902; establishing, a connection via a communication module, between the vehicle and the item that is attached to the vehicle at step 904; initiating a communication via a connector with the item, wherein the communication comprises a message comprising a specification of the item, wherein the specification comprises one or more sensors associated with the item at step 906; connecting with the one or more sensors associated with the item at step 908; receiving active data from the one or more sensors associated with the item at step 910; determining, using the active data a surrounding of the vehicle combination for situational awareness at step 912; and modifying adaptively a safety zone at step 914. A software application 976 may be stored on the computer readable medium 974 and executed on a processor 972 of the computer system 971.

According to an embodiment of the non-transitory computer-readable medium, the situational awareness comprises one or more of detecting a road marking, a traffic sign, a road condition, a pedestrian, a neighboring vehicle, a lane marking, and a traffic situation. According to an embodiment of the non-transitory computer-readable medium, the instructions are operable to provide a warning by highlighting a tunnel or an obstacle that would not be permitted using an overall height of the vehicle combination and the one or more sensors associated with the item. According to an embodiment of the non-transitory computer-readable medium, the instructions are operable to provide a warning by highlighting a turn that would be difficult or not possible to make.

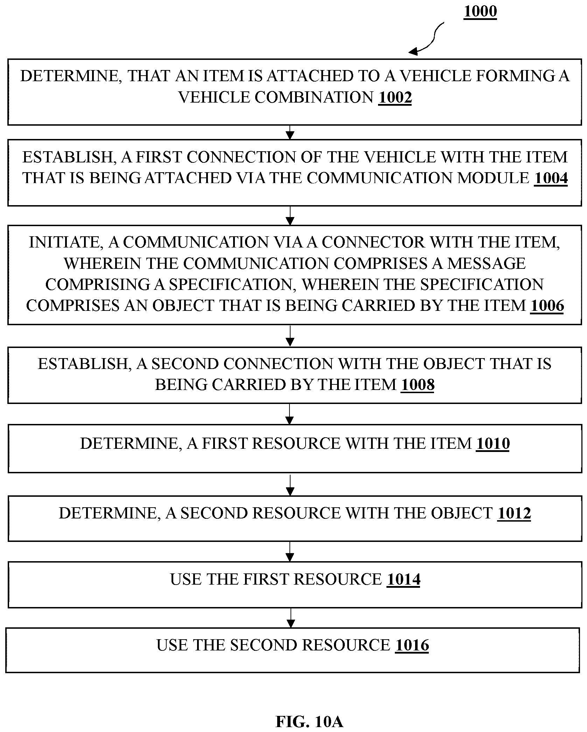

FIG. 10A shows a block diagram for a method for utilizing a resource from the trailer and the object loaded on the trailer by the vehicle according to an embodiment. According to an embodiment, it is a method 1000 comprising determining, that an item is attached to a vehicle forming a vehicle combination at step 1002; establishing, a first connection of the vehicle with the item that is being attached via a communication module at step 1004; initiating, a communication via a connector with the item, wherein the communication comprises a message comprising a specification, wherein the specification comprises an object that is being carried by the item at step 1006; establishing, a second connection with the object that is being carried by the item at step 1008; determining, a first resource with the item at step 1010; determining, a second resource with the object at step 1012; and using the first resource 1014 and using the second resource 1016.

According to an embodiment of the method, the first resource comprises one or more sensors associated with the item. According to an embodiment of the method, the method is operable to receive active data from the one or more sensors associated with the item. According to an embodiment of the method, the second resource comprises one or more sensors associated with the object. According to an embodiment of the method, the method is operable to receive active data from the one or more sensors associated with the object. According to an embodiment of the method, the method is further operable for using the first resource and second resource in providing an enhanced safety zone.

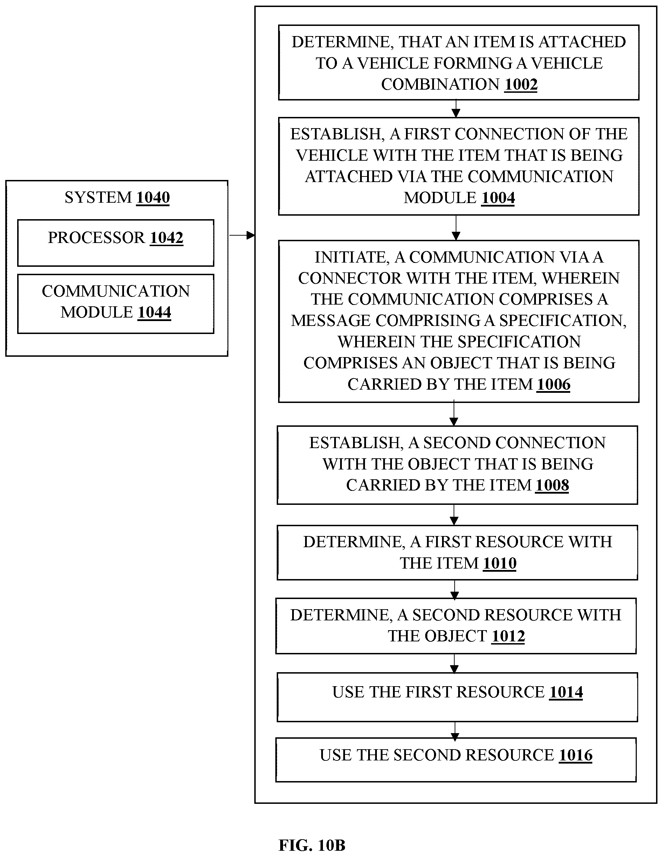

FIG. 10B shows a block diagram for a system for utilizing a resource from the trailer and the object loaded on the trailer by the vehicle according to an embodiment. According to an embodiment, it is a system 1040 comprising a processor 1042; a communication module 1044; wherein the processor 1042 is operable to determine, that an item is attached to a vehicle forming a vehicle combination at step 1002; establish, a first connection of the vehicle with the item that is being attached via the communication module; at step 1004; initiate, a communication via a connector with the item, wherein the communication comprises a message comprising a specification, wherein the specification comprises an object that is being carried by the item at step 1006; establish, a second connection with the object that is being carried by the item at step 1008; determine, a first resource with the item at step 1010; determine, a second resource with the object at step 1012; and use the first resource 1014 and use the second resource at step 1016.

According to an embodiment of the system, the item comprises one or more of a trailer, a boat, a rack, a camper, a caravan, a stock trailer, and a cargo carrier. According to an embodiment of the system, the object is one of an automobile, an equipment, a livestock, an animal, and a golf cart.

According to an embodiment of the system, the first connection is a wireless connection. According to an embodiment of the system, the first connection is a wired connection. According to an embodiment of the system, the communication module is operable to receive communication from the item. According to an embodiment of the system, the connector is operable for providing two-way communication with the item. According to an embodiment of the system, the communication is via a wireless signal using a protocol. According to an embodiment of the system, the communication module supports a communication protocol, wherein the communication protocol comprises one or more of a Hypertext Transfer Protocol (HTTP), Message Queuing Telemetry Transport (MQTT), WebSocket, Constrained Application Protocol (CoAP) and Advanced Message Queuing Protocol (AMQP).

According to an embodiment of the system, the message further comprises one or more an identification of the item, a length of the item, a width of the item, a height of the item, a weight of the item, a make of the item, a model of the item, an attachment mode of the item, one or more resources available with the item, the object that is carried by the item as a load, a weight of the object that is carried by the item, a length of the object that is carried by the item, a width of the object that is carried by the item, a height of the object that is carried by the item, one or more sensors associated with the object that is carried by the item, and one or more resources available with the object that is carried by the item.

According to an embodiment of the system, the first resource comprises one or more sensors associated with the item. According to an embodiment of the system, the first resource is used to provide data about one or more of surrounding vehicles, and road condition data.

According to an embodiment of the system, the second resource is one or more sensors associated with the object. According to an embodiment of the system, the second resource is used to provide data about one or more surrounding vehicles, and road condition data.

According to an embodiment of the system, the first resource comprises one of a battery of the item and a fuel of an item. According to an embodiment of the system, the second connection is operable for charging a battery of the vehicle using the first resource. According to an embodiment of the system, a new range is determined by considering the second resource.

According to an embodiment of the system, the second resource is a fuel available with the object. According to an embodiment of the system, the second resource is a battery of the object. According to an embodiment of the system, the second connection is operable for charging a battery of the vehicle using the second resource. According to an embodiment of the system, the second connection is established via the item. According to an embodiment of the system, a new range is determined by considering the second resource.

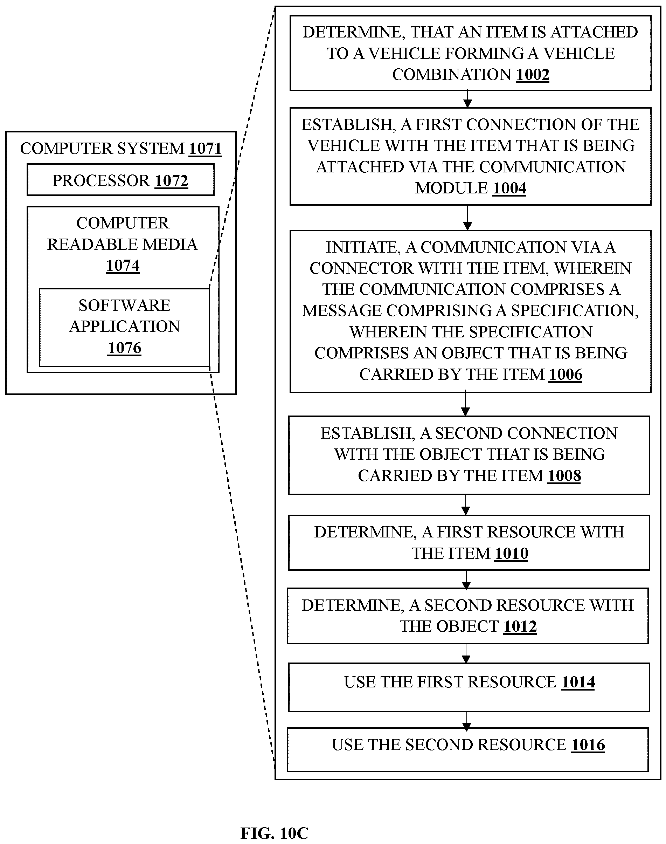

FIG. 10C shows a block diagram for utilizing a resource from the trailer and the object loaded on the trailer by the vehicle according to an embodiment. According to an embodiment, it is a non-transitory computer-readable medium having stored thereon instructions executable by a computer system to perform operations comprising determining, that an item is attached to a vehicle forming a vehicle combination at step 1002; establishing, a first connection of the vehicle with the item that is being attached via a communication module at step 1004; initiating, a communication via a connector with the item, wherein the communication comprises a message comprising a specification, wherein the specification comprises an object that is being carried by the item at step 1006; establishing, a second connection with the object that is being carried by the item at step 1008; determining, a first resource with the item at step 1010; determining, a second resource with the object at step 1012; and using the first resource at step 1014 and using the second resource 1016. A software application 1076 may be stored on the computer readable medium 1074 and executed on a processor 1072 of the computer system 1071.

According to an embodiment of the non-transitory computer-readable medium, the first resource comprises a first battery associated with the item. According to an embodiment of the non-transitory computer-readable medium, the second resource comprises a second battery associated with the object. According to an embodiment of the non-transitory computer-readable medium, the instructions are further operable for using the first resource and second resource in increasing the range of the vehicle.

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message into a first data format associated with the vehicle environment and transmit the converted first data message to the communication module using a first communication protocol associated with the negotiated protocol.

According to an embodiment, secure authentication for data transmissions comprises, provisioning a hardware-based security engine (HSE) located in the cyber security module, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the cyber security module with other computing system subjects (e.g., communication module) to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

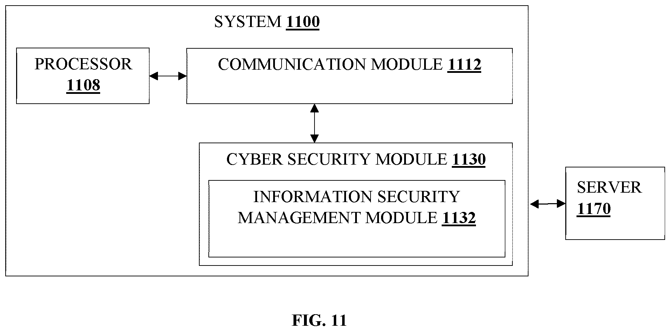

FIG. 11 shows the block diagram of the cyber security module according to an embodiment. In an embodiment, FIG. 11 shows the block diagram of the cyber security module. The communication of data between the system 1100 and the server 1170 through the communication module 1112 is first verified by the information security management module 1132 before being transmitted from the system to the server or from the server to the system. The information security management module is operable to analyze the data for potential cyber security threats, to encrypt the data when no cyber security threat is detected, and to transmit the data encrypted to the system or the server. The system 1100 comprises processor 1108.

In an embodiment, the cyber security module further comprises an information security management module providing isolation between the system and the server. The information security management module is operable to receive data from the communication module, exchange a security key at the start of the communication between the communication module and the server, receive a security key from the server, authenticate an identity of the server by verifying the security key, analyze the security key for potential cyber security threats, negotiate an encryption key between the communication module and the server, receive the encrypted data and transmit the encrypted data to the server when no cyber security threat is detected.

The information security management module is operable to exchange a security key at the start of the communication between the communication module and the server, receive a security key from the server, authenticate an identity of the server by verifying the security key, analyze the security key for potential cyber security threats, negotiate an encryption key between the communication module and the server, receive encrypted data, decrypt the encrypted data, and perform an integrity check of the decrypted data, and transmit the decrypted data to the communication module when no cyber security threat is detected.

In an embodiment, the integrity check is a hash-signature verification using a Secure Hash Algorithm 256 (SHA256) or a similar method. In an embodiment, the information security management module is operable to perform asynchronous authentication and validation of the communication between the communication module and the server. In an embodiment, the information security management module is operable to raise an alarm if a cyber security threat is detected. In an embodiment, the information security management module is operable to discard the encrypted data received if the integrity check of the encrypted data fails. In an embodiment, the information security management module is operable to check the integrity of the decrypted data by checking accuracy, consistency, and any possible data loss during the communication through the communication module.

In an embodiment, the server is physically isolated from the system through the information security management module. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carried out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data from the server, the data is decrypted first, integrity verification is carried out on the data after decryption, and if verification is passed, the data is sent out through the communication module; otherwise, the data is discarded. In an embodiment, the identity authentication is realized by adopting an asymmetric key with a signature. In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys. In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key. In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model. The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and / or technical improvement over technologies found in the marketplace, and / or to enable others of ordinary skill in the art to understand the embodiments described herein.

## Claims

1. A system comprising:
a processor; a communication module;
wherein the processor is operable to
determine, that an item is attached to a vehicle forming a vehicle combination;
establish, a first connection of the vehicle with the item that is being attached via the communication module;
initiate, a communication via a connector with the item, wherein the communication comprises a message comprising a specification, wherein the specification comprises an object that is being carried by the item;
establish, a second connection with the object that is being carried by the item;
determine, a first resource with the item;
determine, a second resource with the object; and
use the first resource and the second resource.

2. The system of claim 1, wherein the item comprises one or more of a trailer, a boat, a rack, a camper, a caravan, a stock trailer, and a cargo carrier.

3. The system of claim 1 or 2, wherein the object is one of an automobile, an equipment, a golf cart, a livestock, and an animal.

4. The system of any one of the previous claims, wherein the first connection is one of a wireless connection and a wired connection.

5. The system of any one of the previous claims, wherein the connector is operable for providing two way communication with the item.

6. The system of any one of the previous claims, wherein the message further comprises one or more of an identification of the item, a length of the item, a width of the item, a height of the item, a weight of the item, a make of the item, a model of the item, an attachment mode of the item, one or more resources available with the item, the object that is carried by the item as a load, a weight of the object that is carried by the item, a length of the object that is carried by the item, a width of the object that is carried by the item, a height of the object that is carried by the item, one or more sensors associated with the object that is carried by the item, and one or more resources available with the object that is carried by the item.

7. The system of any one of the previous claims,
wherein the first resource comprises one or more sensors associated with the item and wherein the first resource is used to provide data about one or more of surrounding vehicle, and a road condition data;
and/or
wherein the second resource is one or more sensors associated with the object, and wherein the second resource is used to provide data about one or more of surrounding vehicle, and a road condition data.

8. The system of any one of the previous claims, wherein the first resource comprises one of a battery of the item;
and, in particular:
wherein the second connection is operable for charging a battery of the vehicle using the second resource;
and/or
wherein a new range is determined by considering the second resource, and wherein the second resource is a battery of the object.

9. The system of any one of the previous claims, wherein the second connection is established via the item.

10. The system of any one of the previous claims, wherein a new range is determined by considering the second resource.

11. A method comprising:
determining, that an item is attached to a vehicle forming a vehicle combination;
establishing, a first connection of the vehicle with the item that is being attached via a communication module;
initiating, a communication via a connector with the item, wherein the communication comprises a message comprising a specification, wherein the specification comprises an object that is being carried by the item;
establishing, a second connection with the object that is being carried by the item;
determining, a first resource with the item;
determining, a second resource with the object; and
using the first resource and the second resource.

12. The method of claim 11, wherein the first resource comprises one or more sensors associated with the item, and wherein the second resource comprises one or more sensors associated with the obj ect.

13. The method of claim 12, wherein the method is operable to receive active data from the one or more sensors associated with the item, and wherein the method is operable to receive active data from the one or more sensors associated with the object.

14. The method of any one of claims 11 to 13, wherein the method is further operable for using the first resource and the second resource in providing an enhanced safety zone.

15. A non-transitory computer-readable medium having stored thereon instructions executable by a computer system to perform operations comprising:
determining, that an item is attached to a vehicle forming a vehicle combination;
establishing, a first connection of the vehicle with the item that is being attached via a communication module;
initiating, a communication via a connector with the item, wherein the communication comprises a message comprising a specification, wherein the specification comprises an object that is being carried by the item;
establishing, a second connection with the object that is being carried by the item;
determining, a first resource with the item;
determining, a second resource with the object; and
using the first resource and the second resource;
and, in particular:
wherein the first resource comprises a first battery associated with the item, and wherein the second resource comprises a second battery associated with the object;
and/or
wherein the instructions are further executable for using the first resource and the second resource in increasing a range of the vehicle.
